# FASCICULE DE BREVET EUROPEEN

(11) **EP 2 682 321 B1**
(45) Date de publication et mention de la délivrance du brevet: **16.05.2018**
(21) Numéro de dépôt: 13175424.4
(22) Date de dépôt: 05.07.2013
(51) Int. Cl.: B61L 15/00, B61L 27/00, G01M 13/04, G01M 17/10

(54) **Diagnostic de l'état structurel d'unités de roulement d'un engin, incluant des moyens de calcul et d'analyse dissociés structurellement de l'engin**
Diagnosesystem des Strukturzustands von Rollvorrichtungen eines Geräts, einschließlich integrierter Berechnungs- und Analysemittel, die strukturell vom Gerät getrennt sind
Diagnosis of the structural condition of rolling units of a machine, including computing means and structurally dissociated analysis of the machine.

(30) Priorité: 06.07.2012 FR 1256561
(43) Date de publication de la demande: 08.01.2014
(73) Titulaire: NTN-SNR Roulements, 74010 Annecy (FR)
(72) Inventeur: Desbiolles, Pascal, 74570 Thorens Glieres (FR); Faugeras, Gilles, 73630 Le Chatelard (FR); Guerre-Chaley, Frédéric, 74230 Dingy Saint Clair (FR)
(74) Mandataire: Derambure Conseil

(56) Documents cités:
- WO-A1-2005/105536
- WO-A1-2008/014766
- US-A1- 2002 049 520
- US-A1- 2007 208 841

## Description

L'invention concerne, de façon générale, le domaine technique du diagnostic de l'état structurel d'unités de roulements implantées sur des engins à roues, dans le cas où il est prévu des moyens de calcul et d'analyse dissociés structurellement de l'engin.

Elle a plus spécialement pour objet, selon un premier aspect, un système de diagnostic de l'état structurel d'une pluralité d'unités de roulement implantées sur un engin à roues tel qu'un train ou engin mobile et/ou automobile. Elle a également pour objet, selon un deuxième aspect, un procédé de mise en oeuvre d'un système de diagnostic selon le premier aspect.

Dans le contexte de l'invention, l'on entend par « unité de roulement », un ensemble constituant un roulement ou incluant un roulement et comprenant typiquement, au moins, une bague externe et une bague interne, les deux bagues étant coaxiales et espacées radialement, et une pluralité de corps roulants interposés entre les deux bagues et coopérant avec des chemins de roulement ménagés sur celles-ci, moyennant généralement une cage de roulement.

Dans le contexte de l'invention, une telle unité de roulements est implantée sur un engin à roues, d'une part étant portée par la structure portante de l'engin (châssis), d'autre part, portant l'arbre rotatif de roue.

Dans le contexte de l'invention, un tel engin à roues est typiquement un train, mais, plus généralement, peut être un engin mobile et/ou automobile tel qu'un chariot de transport ou de manutention ou un camion, cette liste n'étant pas limitative. De façon typique, un tel engin à roues comporte une pluralité d'unités de roulement, plusieurs essieux, le cas échéant pour un train plusieurs boggies.

Un tel engin à roues est amené à se déplacer ou à être déplacé sur une voie d'un réseau de voies. Lors d'un tel déplacement, les unités de roulement sont en fonctionnement rotatif.

Dans le contexte de l'invention, l'on entend par « voie » un espace apte au déplacement de l'engin à roues, notamment un espace aménagé pour permettre ou faciliter le déplacement. Ainsi, une voie peut être constituée de rails, dans le cas d'un train, d'une piste dans le cas d'un chariot, d'une chaussée dans le cas d'un camion. En général, il y a plusieurs voies agencées de sorte à former un réseau.

Dans le contexte de l'invention, l'on entend par état « structurel » d'une unité de roulement, l'état de l'unité de roulement eu égard à une caractéristique propre de celle-ci ayant un effet sur ses conditions de roulement. De façon typique, l'état structurel est la présence ou l'importance d'une altération de l'état de surface des chemins de roulement, de la bague, ou des corps roulants eux-mêmes, tel qu'un écaillage, ou une détérioration plus ou moins importante de la cage du roulement, qui peut avoir pour effet une irrégularité de la rotation, voire son blocage et *in fine* une destruction plus ou moins importante de l'unité de roulement. L'initiation d'une telle altération de l'unité de roulement est peu décelable voire invisible à l'oeil, outre d'ailleurs qu'elle peut être masquée à la vue par des organes de l'unité de roulement ou de l'engin sur lequel il est implanté. Une telle altération de l'unité de roulement peut apparaître pour nombre de raisons, et de façon impromptue. Elle peut se dégrader de façon plus ou moins rapide. Et, elle peut perturber le bon fonctionnement de l'unité de roulement, et donc de l'engin, voire mettre en cause la sécurité.

Dans le contexte de l'invention, l'on entend par « diagnostic » de l'état structurel d'une unité de roulement, la conclusion tirée sur la nature ou le degré de cet état structurel, comparativement soit à l'état structurel théorique parfait, notamment d'origine, de l'unité de roulement soit à un état structurel considéré comme significatif, et notamment problématique ou plus ou moins critique, au regard d'un fonctionnement normal ou de la sécurité ou de la maintenance ou de la nécessité de remplacer ou de prévoir de remplacer l'unité de roulement par une unité de roulement neuve ou du moins ayant un état structurel convenable.

Dans le contexte de l'invention, l'on distingue le diagnostic de l'état structurel présent et le diagnostic de l'état structurel prévisionnel. L'état structurel présent se réfère à celui, réel, qui est contemporain du diagnostic ou bien de la (ou des) mesure(s) qui le permet(tent). L'état structurel prévisionnel se réfère à celui, prospectif, qui peut être déduit d'une (ou de) mesure(s) et d'une loi d'évolution donnée de l'état structurel en fonction de la rotation de l'unité de roulement.

Ainsi, dans le contexte de l'invention et dans une application typique, l'on vise à tirer une conclusion sur la nature ou le degré de l'état structurel, prévisionnel, de chacune des unités de roulement de l'engin à roues, au regard de la normalité du fonctionnement ou de la sécurité ou de la maintenance ou du remplacement.

Le document FR 2 944 875 décrit un procédé de détection d'un défaut structurel d'un ensemble mécanique comprenant un organe tournant tel qu'une unité de roulement. Selon ce procédé, on mesure la vitesse instantanée de rotation et on traite la vitesse ainsi mesurée de sorte à déduire l'apparition d'un défaut (c'est-à-dire une modification) de l'état structurel de l'unité de roulement.

L'on connaît des systèmes visant à connaître l'état structurel des unités de roulement implantées sur un train apte au déplacement sur un réseau de voies. Certains systèmes comprennent, embarqués sur le train, des appareils de mesure et de collecte dans le temps de la valeur d'un paramètre des conditions de roulage des unités de roulement caractéristique de leur état structurel. Plus particulièrement, ces appareils de mesure et de collecte sont associés structurellement et fonctionnellement aux unités de roulement et aptes à mesurer et collecter les valeurs du paramètre pour fournir des données caractéristiques des conditions de roulage des unités de roulement. Ces systèmes comprennent aussi des moyens de stockage de données aptes à stocker lesdites données caractéristiques des conditions de roulage ainsi que des données d'identification des unités de roulement.

Selon une réalisation, les données d'identification des unités de roulement et les données caractéristiques fournies par les appareils de mesure et de collecte sont utilisées *a posteriori* pour déterminer l'état structurel des unités de roulement. Une telle réalisation présente toutefois l'inconvénient de ne pas offrir un suivi suffisamment régulier et, donc, fiable de l'état structurel des unités de roulement. Dès lors, l'on est conduit, par exemple, à coupler le système à des capteurs de température positionnés sur ou à proximité immédiate des voies et permettant d'identifier très rapidement l'apparition d'un échauffement critique et caractéristique d'une condition de roulage inhabituelle et dangereuse. Mais, d'une part, cette solution engendre des surcoûts du fait de l'utilisation de capteurs de température supplémentaires. Et, d'autre part, l'identification d'une telle condition de roulage inhabituelle et dangereuse intervient souvent tardivement et oblige donc à immobiliser le train sur une voie du réseau, ce qui génère d'importants retards sur l'ensemble du réseau.

Selon une autre réalisation envisagée, l'ensemble des appareils de mesure et de collecte de données permettant de fournir les données caractéristiques des conditions de roulage et l'ensemble des moyens de stockage de ces données caractéristiques des conditions de roulage sont installées, en première monte, sur le train. Selon cette réalisation, les appareils de mesure et de collecte de données sont alors reliés, par le biais de liaisons filaires intégrées au train, à une unité de recueil de données et à des moyens de calcul et d'analyse également embarqués sur le train. Les moyens de calcul et d'analyse permettent ainsi de calculer, à partir des données caractéristiques recueillies, une information sur l'état structurel des unités de roulement qui peut, le cas échéant, être envoyés à l'extérieur du train. Cette réalisation présente toutefois également plusieurs inconvénients. Elle oblige, en effet, que soient intégrées directement au train les liaisons filaires permettant de communiquer les données caractéristiques à l'unité de recueil de données. Cela implique, donc, d'importants efforts d'intégration des câblages dans le train, ce qui peut s'avérer problématique en termes de coûts, de poids et d'encombrement, surtout lorsque le système de diagnostic n'est pas intégré au train en première monte mais résulte au contraire d'une installation postérieure, sur un train préexistant. Par conséquent, le déploiement d'une telle solution sur un parc de trains préexistants ayant quelque importance, est quasiment impossible à des conditions économiques raisonnables. En outre, un tel système de diagnostic impose d'assurer le fonctionnement des moyens de calcul et d'analyse à bord des trains, ce qui est consommateur d'énergie et constitue aussi un frein à son déploiement.

Le document WO 2005/105536 porte sur un système de diagnostic de l'état des unités de roulement d'un train, destiné au conducteur du train, qui comprend:
▪ des appareils de mesure et de collecte de la valeur d'un paramètre critique, associés aux unités de roulement, embarqués sur le train,
▪ des moyens de stockage de données, embarqués sur le train,
▪ des moyens de communication de données par liaison sans fil, embarqués sur le train,
▪ une unité de recueil de données, dissociée structurellement du train,
▪ et des moyens de calcul et d'analyse.

Les appareils de mesure sont reliés par nombre de liaisons à une unité principale portée par la locomotive qui porte également les moyens de calcul et d'analyse, associés par suite à cette dernière. Ainsi, le conducteur peut être informé de ce qu'une défaillance a été décelée sur une unité de roulement. Les moyens de communication de données par liaison sans fil sont mis en oeuvre pour relier les appareils de mesure à l'unité principale. D'autre part, il est prévu de télécharger les données des moyens de calcul et d'analyse en gare, par radio, à des fins statistiques.

Un tel système procède donc de l'information d'urgence et immédiate du conducteur du train sur une déficience détectée d'une unité de roulement, non de la gestion préventive et curative des unités de roulement. En outre, un tel système impose d'équiper l'ensemble du train, pris en tant que tel, et de prévoir que la locomotive porte les moyens de stockage de données, les moyens de communication de données par radio, et les et des moyens de calcul et d'analyse.

Le document WO 2008/014766 porte également sur un système de diagnostic de l'état d'un roulement d'un train. Il décrit un capteur d'un paramètre opératoire monté directement sur le roulement mobile, associé à un moyen de transmission, monté également mobile, en regard duquel est placé une unité de recueil fixe, portée par un capot monté sur la boîte d'essieu, reliée à une antenne qui envoie un signal à une unité de traitement dissociée du train. Il est prévu un flasque mobile avec le roulement, portant le moyen de transmission et un flasque fixe porté par le capot monté sur la boîte d'essieu, les deux flasques formant une génératrice de courant. Le document WO 2008/014766 décrit un tel système pour un seul roulement et n'envisage pas la structure en vue de diagnostiquer l'état de tous les roulements.

Ainsi, il existe le besoin de disposer d'un système de diagnostic de l'état structurel d'une pluralité d'unités de roulement implantées sur un engin à roues qui soit exempt de l'une au moins des limitations précédemment évoquées.

Plus particulièrement, il existe le besoin de disposer d'un système de diagnostic, non seulement de l'état présent mais également de l'état prévisionnel, avec des moyens de calcul et d'analyse dissociés structurellement de l'engin, qui soit, d'une part, simple et économique à installer sur un parc d'engins préexistant et qui soit, d'autre part, peu consommateur et/ou autonome en énergie électrique.

À cet effet, selon un premier aspect, l'invention a pour objet un système de diagnostic de l'état structurel d'une pluralité d'unités de roulement, chacune ayant une donnée d'identification propre, implantées sur un engin à roues pour son déplacement sur un réseau de voies, en particulier un train, qui comprend:
▪ des appareils de mesure et de collecte dans le temps de la valeur d'au moins un paramètre des conditions de roulage des unités de roulement caractéristique de leur état structurel, associés structurellement et fonctionnellement à la pluralité d'unités de roulement, embarqués sur l'engin, aptes à mesurer et collecter les valeurs dudit paramètre et à fournir des données caractéristiques des conditions de roulage de chacune des unités de roulement, moyennant, le cas échéant, des moyens de traitement associés fonctionnellement,
▪ des moyens de stockage de données, embarqués sur l'engin, aptes à stocker lesdites données caractéristiques fournies par les appareils de mesure et de collecte et les données d'identification des unités de roulement,
▪ des moyens de communication de données par liaison sans fil, embarqués sur l'engin,
▪ au moins une unité de recueil de données, dissociée structurellement de l'engin,
▪ des moyens de calcul et d'analyse,

Le système de diagnostic est tel que : les moyens de communication de données par liaison sans fil dans une certaine zone de couverture sont associés fonctionnellement aux moyens de stockage de données et aptes à transférer lesdites données caractéristiques et les données d'identification stockées,
▪ la au moins une unité de recueil de données est apte à être positionnée structurellement par rapport à une voie dans la zone de couverture des moyens de communication embarqués sur l'engin se trouvant sur cette voie et à recueillir ainsi lesdites données caractéristiques et les données d'identification stockées,
▪ les moyens de calcul et d'analyse sont dissociés structurellement de l'engin, aptes à être associés fonctionnellement à l'unité de recueil et aptes, à partir desdites données caractéristiques et d'au moins une valeur significative prédéterminée du - ou fonction du - paramètre caractéristique, à fournir une information de diagnostic de l'état structurel présent ou prévisionnel de chacune des unités de roulement.

Selon une réalisation, le système de diagnostic comprend des moyens de communication de données par liaison sans fil à courte distance inférieure à environ 100 mètres, plus particulièrement inférieure à environ 20 mètres, et/ou à moyenne distance comprise entre environ 100 mètres et environ 500 mètres, et/ou à longue distance comprise entre environ 500 mètres et quelques kilomètres.

Selon une réalisation, les moyens de communication sont au moins pour partie localisés vers la périphérie de l'engin, et en particulier adjacents ou proches de la périphérie de l'engin.

Selon une réalisation, les moyens de communication sont au moins pour partie localisés vers la partie de l'engin où se trouvent les unités de roulement, et en particulier la partie inférieure de l'engin, ou vers l'avant de l'engin.

Selon une réalisation, le système de diagnostic soit comprend une pluralité de moyens de communication de données de sorte que des moyens de communication de données sont prévus propres à chaque unité de roulement de la pluralité d'unités de roulement soit comprend des moyens de communication communs à plusieurs unités de roulement de la pluralité de roulement, moyennant des moyens de transmission entre eux, en particulier soit sont communs à plusieurs unités de roulement d'un ensemble tel qu'un essieu ou un boggie soit sont communs à toutes les unités de roulement de la pluralité d'unités de roulement.

Selon une réalisation, le système de diagnostic soit comprend des moyens de communication de données en plusieurs localisations soit comprend des moyens de communication de données en une seule localisation.

Selon une réalisation, le système de diagnostic comprend une unité de recueil de données qui soit est fixe soit est déplaçable, en particulier transportable, plus spécialement portable en tout ou partie tel qu'une partie portative de mesure et une partie formant console d'accueil.

Selon une réalisation, en position de recueil une unité de recueil est disposée le long d'une voie du réseau, d'un côté ou des deux côtés de ladite voie, en particulier en vis-à-vis, ou dans la région où plusieurs voies du réseau sont structurellement proches les unes des autres.

Selon une réalisation, le système de diagnostic soit comprend une unique unité de recueil pour la totalité du réseau de voies soit comprend une pluralité d'unités de recueil, en particulier une pluralité d'unités de recueil réparties par rapport au réseau de voies, et plus spécialement réparties au moins grosso modo régulièrement.

Selon une réalisation, une unité de recueil est associée à une voie où en situation normale l'engin soit roule soit est à l'arrêt, le diagnostic étant effectué, respectivement, pour un engin roulant ou un engin à l'arrêt.

Selon une réalisation, le système de diagnostic soit comprend une pluralité d'appareils de mesure et de collecte de sorte qu'un appareil de mesure et de collecte est prévu propre à chaque unité de roulement de la pluralité d'unités de roulement soit comprend des appareils de mesure et de collecte pour partie communs à plusieurs unités de roulement de la pluralité d'unités de roulement, moyennant des moyens de transmission entre eux, en particulier communs à plusieurs unités de roulement d'un ensemble tel qu'un essieu ou un boggie.

Selon une réalisation, pour une unité de roulement, le système de diagnostic comprend soit un unique appareil de mesure et de collecte soit au moins deux appareils de mesure et de collecte.

Selon une réalisation, pour une unité de roulement, le système de diagnostic comprend au moins deux appareils de mesure et de collecte, montés en parallèle, en particulier un appareil de mesure et de collecte de haute résolution et un appareil de mesure et de collecte de basse consommation électrique, en particulier de basse résolution, en particulier lorsque les moyens d'alimentation électrique des appareils de mesure et de collecte sont autres que les moyens d'alimentation électrique de l'engin, étant propres à chaque appareil de mesure et de collecte ou communs à plusieurs appareils de mesure et de collecte.

Selon une réalisation, le système de diagnostic soit comprend une pluralité de moyens de stockage de données de sorte que des moyens de stockage de données sont prévus propres à chaque appareil de mesure et de collecte, les moyens de stockage de données stockant lesdites données caractéristiques de l'appareil de mesure et de collecte correspondant mais non celles des autres appareils de mesure et de collecte soit comprend des moyens de stockage de données partagés entre plusieurs appareils de mesure et de collecte, moyennant des moyens de transmission entre eux, en particulier soit communs à plusieurs appareils de mesure et de collecte d'un ensemble tel qu'un essieu ou un boggie soit communs à tous les appareils de mesure, collecte et stockage.

Selon une réalisation, le système de diagnostic comprend des moyens de stockage de données pendant une période de temps qui soit correspond à la période de temps entre deux recueils successifs de donnés par une unité de recueil soit correspond à une durée préfixée fixée l'opérateur mettant en oeuvre le système de diagnostic, les moyens de stockage étant vidés des données préalablement stockées à l'issue de la période de temps.

Selon une réalisation, le système de diagnostic comprend également des moyens de stockage permanent de données.

Selon une réalisation, un appareil de mesure et de collecte est au moins pour une partie substantielle placé dans un boîtier propre, fixé à l'engin, en particulier un boîtier fixé de façon amovible ou rapporté.

Dans ce cas, selon une réalisation les moyens de communication et/ou les moyens de stockage de données sont, au moins pour partie, associés structurellement au boîtier correspondant.

Selon une réalisation, soit un boîtier est propre à chaque unité de roulement de la pluralité d'unités de roulement soit un boîtier est commun à plusieurs unités de roulement de la pluralité de roulement, en particulier communs à plusieurs unités de roulement d'un ensemble tel qu'un essieu ou un boggie.

Selon une réalisation, les moyens d'alimentation électrique des appareils de mesure et de collecte soit sont propres à chaque appareil de mesure et de collecte, et en particulier intégrés à eux de sorte à minimiser la longueur de câblage soit sont communs à plusieurs appareils de mesure et de collecte moyennant un câblage de distribution de l'alimentation électrique, en particulier communs à plusieurs appareils de mesure et de collecte d'un ensemble tel qu'un essieu ou un boggie soit sont communs aux moyens d'alimentation électrique de l'engin moyennant un câblage de distribution de l'alimentation électrique entre les moyens d'alimentation électrique de l'engin et les appareils de mesure et de collecte.

Selon une réalisation du système de diagnostic avec des moyens d'alimentation électrique des appareils de mesure et de collecte étant autres que les moyens d'alimentation électrique de l'engin et étant propres à chaque appareil de mesure et de collecte ou communs à plusieurs appareils de mesure et de collecte, les moyens d'alimentation électrique sont autonomes comme des batteries électriques ou comprennent des moyens de récupération d'énergie.

Selon une réalisation du système de diagnostic avec des moyens d'alimentation électrique des appareils de mesure et de collecte étant autres que les moyens d'alimentation électrique de l'engin et étant autonomes et propres à chaque appareil de mesure et de collecte ou communs à plusieurs appareils de mesure et de collecte, le système de diagnostic comprend en outre des moyens de contrôle et d'information de l'état de charge électrique des moyens d'alimentation électrique aptes à contrôler ledit état de charge électrique des moyens d'alimentation, notamment l'atteinte d'au moins un seuil inférieur de sécurité, et à fournir une information sur ledit état de charge électrique des moyens d'alimentation électrique, à un moyen d'information embarqué sur l'engin, en particulier situé au voisinage desdits moyens d'alimentation électrique, et/ou aux moyens de communications de données, puis à l'unité de recueil.

Selon une réalisation, le système de diagnostic comprend en outre une mémoire de stockage desdites données caractéristiques, associée fonctionnellement aux moyens de calcul et d'analyse, et dissociée structurellement - et pouvant être le cas échéant distants - du réseau de voies et de l'engin.

Dans ce cas, selon une réalisation la mémoire de stockage est dans une localisation qui, par rapport à la localisation des moyens de calcul et d'analyse, soit est proche soit est distante, moyennant des moyens de communication entre eux.

Selon les réalisations, les moyens de calcul et d'analyse sont programmés de manière, à partir des données caractéristiques des conditions de roulage des unités de roulement, à mettre en oeuvre tout ou partie d'un procédé de détection d'une anomalie structurelle des unités de roulement, et/ou à mettre en oeuvre un procédé de prédiction qu'une unité de roulement devrait atteindre un seuil significatif de l'état structurel considéré après une certaine rotation, selon une loi d'évolution du paramètre des conditions de roulage de l'unité de roulement en fonction de la rotation de celle-ci.

Selon une réalisation, les moyens de calcul et d'analyse soit sont structurellement distincts de l'unité de recueil et aptes à recevoir lesdites données caractéristiques depuis l'unité de recueil moyennant des moyens de communication soit sont structurellement associés à l'unité de recueil.

Selon une réalisation, les moyens de calcul et d'analyse sont aptes à transmettre les informations de diagnostic à l'unité de recueil et/ou à un moyen d'information embarqué sur l'engin, moyennant le cas échéant des moyens de communication de diagnostic.

Selon une réalisation, le système de diagnostic comporte, en outre, des moyens d'expression visuelle et/ou sonore embarqués sur l'engin, aptes à recevoir et à fournir une information de diagnostic de l'état structurel présent ou prévisionnel de chacune des unités de roulement, en particulier une information de diagnostic critique, en particulier aptes à communiquer avec l'unité de recueil moyennant des moyens de communication, de sorte à recevoir de l'unité de recueil ladite information de diagnostic.

Selon une réalisation, l'état structurel présent ou prévisionnel diagnostiqué est une altération de l'unité de roulement, tel qu'un écaillage ou analogue, en particulier la présence ou non d'une telle altération, et/ou le degré d'importance d'une telle altération.

Selon une réalisation, le paramètre des conditions de roulage d'une unité de roulement caractéristique de son état structurel est la vitesse instantanée de rotation de l'unité de roulement, les appareils de mesure et de collecte étant des capteurs de vitesse instantanée de rotation, aptes à mesurer la vitesse de rotation instantanée d'une unité de roulement.

Selon une réalisation du système, l'engin comporte plusieurs essieux, le cas échéant boggies, tels qu'un engin tracté, en particulier un train, ou un engin mobile ou automobile.

L'invention concerne également, selon un deuxième aspect, un procédé de mise en oeuvre d'un système de diagnostic de l'état structurel d'une pluralité d'unités de roulement, chacune ayant une donnée d'identification propre, implantées sur un engin à roues pour son déplacement sur un réseau de voies, en particulier un train, tel qu'il a été décrit précédemment, dans lequel : moyennant la mise en oeuvre des appareils de mesure et de collecte, on mesure et on collecte dans le temps la valeur d'au moins un paramètre des conditions de roulage des unités de roulement, caractéristique de leur état structurel et on fournit des données caractéristiques des conditions de roulage de chacune des unités de roulement, moyennant la mise en oeuvre des moyens de stockage de données, on stocke lesdites données caractéristiques et les données d'identification, moyennant la mise en oeuvre des moyens de communication de données et l'unité de recueil, on transfère lesdites données caractéristiques et les données d'identification stockées à l'unité de recueil de données alors que l'unité de recueil est positionnée structurellement dans la zone de couverture des moyens de communication, moyennant la mise en oeuvre des moyens de calcul et d'analyse, associés fonctionnellement à l'unité de recueil, à partir desdites données caractéristiques de l'unité de recueil de données et d'au moins une valeur significative prédéterminée du - ou fonction du - paramètre caractéristique, on fournit une information de diagnostic de l'état structurel présent ou prévisionnel de chacune des unités de roulement implantées sur l'engin.

Selon les cas, on associe l'unité de recueil à une voie où en situation normale l'engin soit roule soit est à l'arrêt, et on effectue le diagnostic, respectivement, pour un engin roulant ou un engin à l'arrêt.

On décrit maintenant brièvement les figures.

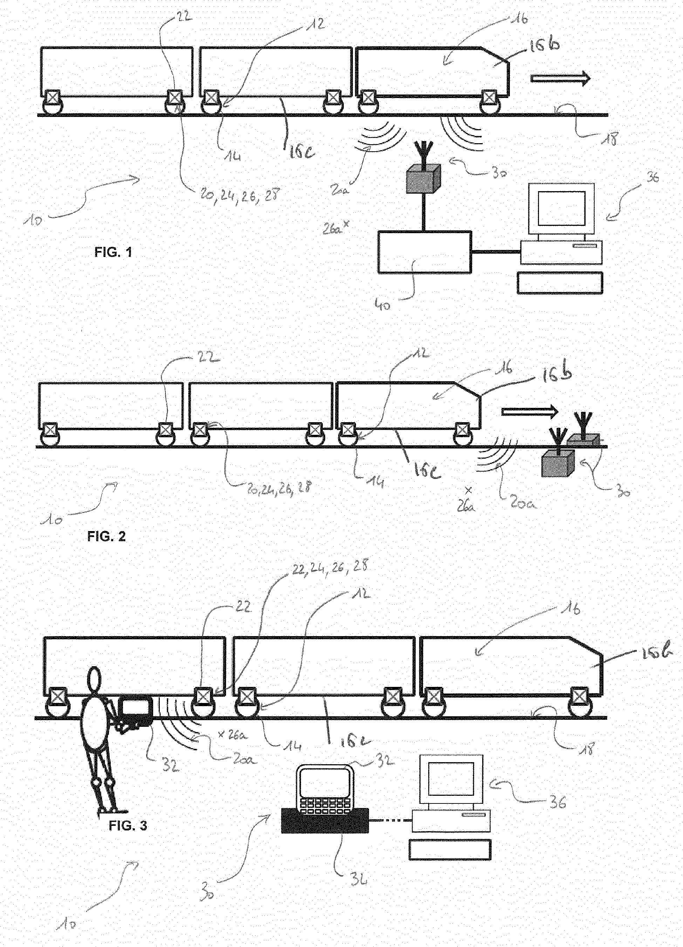

La figure 1 est une vue générale, en représentation symbolique, d'un système de diagnostic selon l'invention permettant de diagnostiquer l'état structurel d'une pluralité d'unités de roulement implantées sur un engin à roues, en l'espèce un train, se déplaçant sur un réseau de voies, dans lequel des moyens de communication de données sont prévus propres à chaque unité de roulement et transmettent, par liaison sans fil, les données caractéristiques des conditions de roulage de chacune desdites unités de roulement et les données d'identification des unités de roulement à une unité de recueil de données disposée le long d'une voie du réseau, d'un côté de ladite voie et dans la zone de couverture des moyens de communication.
La figure 2 est une vue générale symbolique du système de diagnostic analogue à la figure 1, dans lequel il est prévu deux unités de recueil disposées le long d'une voie du réseau, des deux côtés de ladite voie en vis-à-vis.
La figure 3 une vue générale symbolique du système de diagnostic analogue aux figures précédentes, dans lequel l'unité de recueil de données présente une partie portative déplaçable et transportable et une partie formant console d'accueil permettant d'assurer le transfert des données caractéristiques de condition de roulage vers les moyens de calcul et d'analyse.

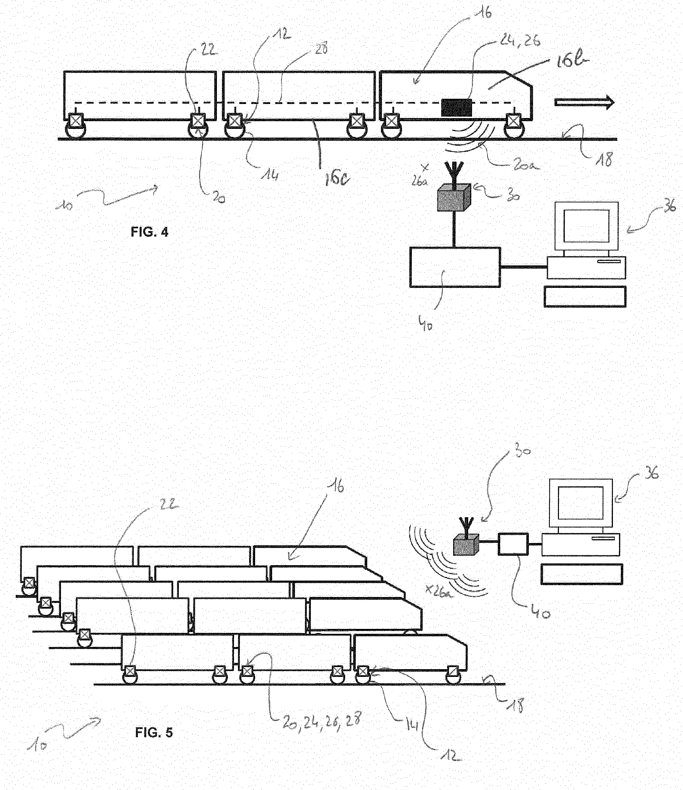

La figure 4 une vue générale symbolique du système de diagnostic analogue aux figures précédentes, dans lequel les moyens de communication de données sont prévus en une seule localisation vers l'avant de l'engin et communs à toutes les unités de roulement moyennant des moyens de transmission entre eux, et transmettent les données à une unité de recueil de données.
La figure 5 une vue générale symbolique du système de diagnostic analogue aux figures précédentes, dans lequel il est prévu une unique unité de recueil pour la totalité du réseau de voies.

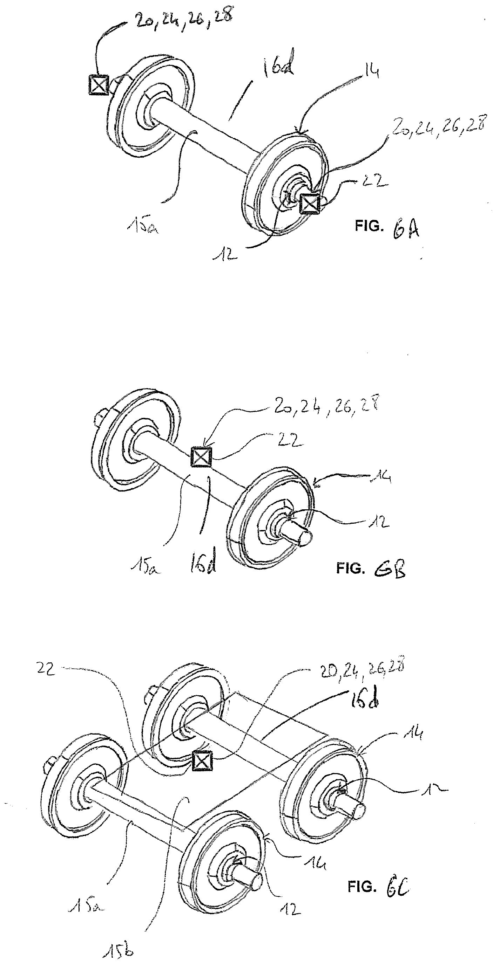

La figure 6A est une vue en perspective et en représentation symbolique, d'un essieu et de deux roues appartenant à un engin selon l'invention - en l'espèce un train -, avec un appareil de mesure et de collecte associé à chaque unité de roulement et chaque roue.
La figure 6B est une vue analogue à la figure 6A avec un appareil de mesure et de collecte associé pour partie au moins aux deux unités de roulement et aux deux roues de l'essieu.
La figure 6C est une vue en perspective et en représentation symbolique, d'un boggie à deux essieux et quatre roues, avec un appareil de mesure et collecte associé pour partie au moins aux quatre unités de roulement et aux quatre roues.

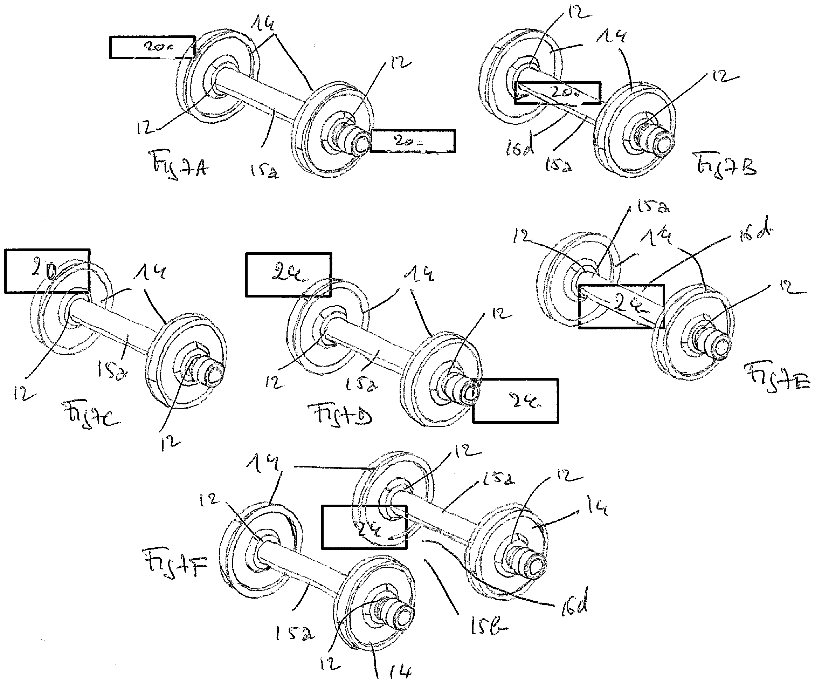

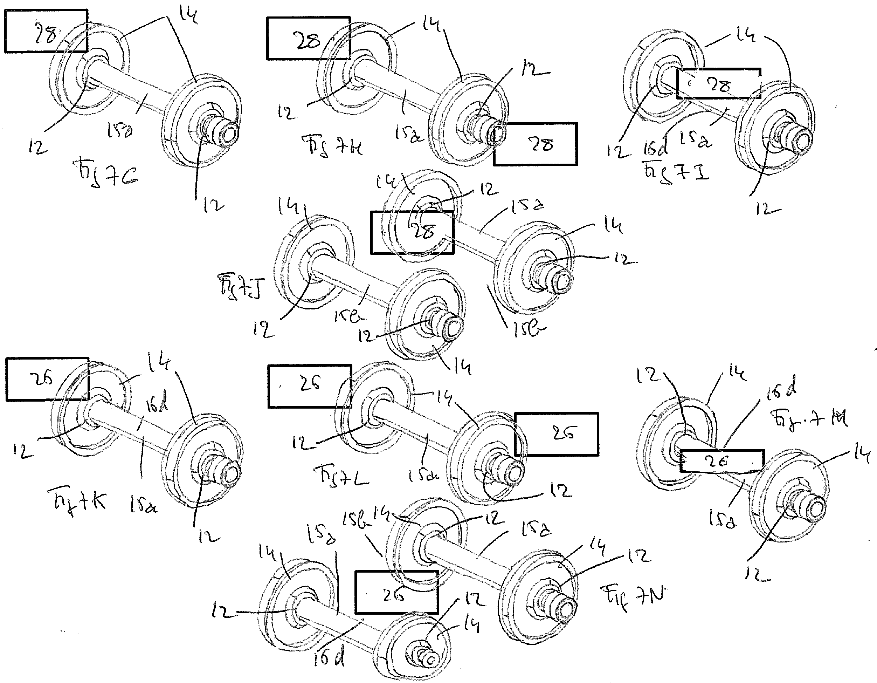

Les figures 7A à 7N sont quatorze vues en perspective et en représentation symbolique, d'un essieu et de deux roues ou d'un boggie à deux essieux et quatre roues, illustrant diverses configurations sur l'essieu ou le boggie des modules des appareils de mesure et de collecte, des moyens de stockage de données, des moyens d'alimentation électrique et des moyens de communication de données, montrant la variété des configurations possibles.

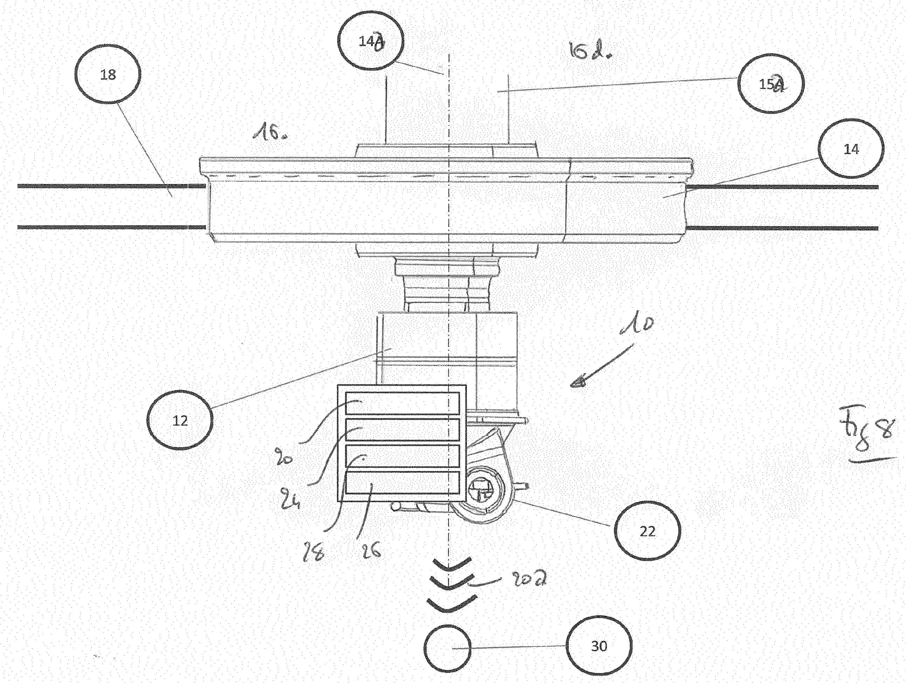

La figure 8 est une vue schématique symbolique illustrant une partie du châssis d'un véhicule, une roue, son essieu, le rail correspondant, une unité de roulement de la roue en question, l'appareil de mesure et de collecte associé, les moyens de stockage de données, les moyens d'alimentation électrique et les moyens de communication de données associés, dans un boitier, et une unité de recueil de données.

On décrit maintenant en détail plusieurs modes de réalisations de l'invention au moyen des exemples expliqués à l'aide du dessin et en utilisant les signes de référence qui figurent sur le dessin.

L'invention concerne un système de diagnostic 10 visant à diagnostiquer l'état structurel d'une pluralité d'unités de roulement 12 associés aux roues 14, d'axes 14a, d'un ou plusieurs engins 16 capables de déplacement sur un réseau de voies 18, ces unités de roulement 12 étant ainsi implantées sur l'engin 16, comme les roues 14.

Par « système », l'on entend un ensemble de moyens associés les uns aux autres de façon organisée, structurelle et/ou fonctionnelle, pour viser un but commun et assurer un même objectif.

Par association « structurelle » de moyens, l'on entend que ces moyens sont associés physiquement entre eux, par exemple solidarisés l'un à l'autre ou solidarisés chacun à un autre moyen.

Par association « fonctionnelle » de moyens, l'on entend que ces moyens fonctionnent l'un avec l'autre, notamment l'un dépendant de l'autre, par exemple parce que l'un fournit en sortie une donnée qui commande le fonctionnement de l'autre.

Ici, le but est la normalité du fonctionnement, la sécurité, la maintenance, le remplacement des unités de roulement 12. Et l'objectif est de diagnostiquer de l'état structurel de ces unités de roulement 12.

Les termes et expressions « diagnostic », « état structurel », « unité de roulement », « engin », « voie » doivent être compris et interprétés comme il a été indiqué au début du texte.

De façon typique, l'état structurel que l'on cherche à diagnostiquer est une altération de l'unité de roulement, comme il a été précédemment défini et exposé.

Par ailleurs, selon une réalisation, l'engin 16 comporte plusieurs essieux 15a supportant, chacun, une ou plusieurs unités de roulement 12. L'engin 16 peut, en outre, comporter des boggies 15b sur lesquels sont alors fixés les essieux 15a.

Selon les réalisations illustrées sur les figures 1 à 5, l'engin 16 supportant les différentes unités de roulement 12 est un train. Mais il pourrait également s'agir de tout autre type de véhicule, motorisé ou non, capable de déplacement sur un réseau de voies 18 déterminé et utilisant une pluralité d'unités de roulement 12. À titre exemplatif et nullement limitatif, les engins 16 peuvent ainsi correspondre à des chariots de convoyage tels que ceux qui sont utilisés dans le domaine industriel ou bien à des formes diverses d'engins automobiles ou bien encore à tout autre type d'engin analogue.

Afin d'assurer le diagnostic individualisé de l'état structurel des unités de roulement 12, chacune de ces unités de roulement 12 est pourvue d'une donnée d'identification propre permettant en l'identifiant de façon unique, de la différencier des autres. Ainsi, à chaque donnée d'identification correspond une seule et unique unité de roulement 12, ce qui permet d'assurer de façon collective un diagnostic visant les unités de roulement de façon individuelle sans risque de confusion.

Le système de diagnostic 10 comporte également, embarqué sur l'engin 16 à roues 14, des appareils de mesure et de collecte 20 dans le temps de la valeur d'un paramètre des conditions de roulage des unités de roulement 12 ou de plusieurs paramètres. Dans la suite du texte, lorsqu'il est question « du » paramètre, il faut comprendre l'au moins un paramètre considéré. Un tel appareil de mesure et de collecte peut former une seule entité propre groupée ou bien peut comporter plusieurs parties associées fonctionnellement entre elles mais pouvant être plus ou moins disjointes structurellement, l'expression « appareil de mesure et de collecte » visant les deux situations.

Les appareils de mesure et de collecte 20 sont associés structurellement et fonctionnellement aux unités de roulement 12 et ils mesurent et collectent les différentes valeurs, dans le temps, du paramètre des conditions de roulage susceptibles - après analyse - de caractériser l'état structurel, présent ou prévisionnel, des unités de roulement 12.

Les appareils de mesure et de collecte 20 sont capables de fournir, à partir de plusieurs valeurs dans le temps, du paramètre des conditions de roulage, des données caractéristiques des conditions de roulage 20a de chacune des unités de roulement. Les données caractéristiques des conditions de roulage sont soit les valeurs du paramètre des conditions de roulage soit calculées à partir des valeurs du paramètre des conditions de roulage, moyennant des moyens de traitement associés fonctionnellement aux appareils de mesure et de collecte 20, et le cas échéant associés structurellement à eux. Par conséquent, l'expression « appareil de mesure et de collecte » inclut le cas échéant les moyens de traitement dont il vient d'être question.

Dans le cas où l'état structurel que l'on cherche à diagnostiquer est une altération tel qu'un écaillage ou analogue, le paramètre qui peut être pris en compte est la vitesse instantanée de rotation de l'unité de roulement, comme il est décrit dans le document FR 2 944 875. Les moyens de traitement dont il vient d'être question peuvent alors assurer la mise en oeuvre du procédé décrit dans le document FR 2 944 875.

Dans ce cas, et selon une réalisation non exclusive, un appareil de mesure et de collecte 20 inclut un capteur de vitesse instantanée de rotation capable de mesurer la vitesse instantanée de rotation de la partie mobile d'une unité de roulement 12. Selon une variante, le capteur mesure la vitesse instantanée de plusieurs unités de roulement 12, typiquement sur un même essieu 15a, par exemple la mesure directe de la vitesse instantanée de la première unité de roulement 12 de l'essieu 15a et la mesure indirecte de la vitesse instantanée de la seconde unité de roulement 12 de l'essieu 15a (figure 7C). Les capteurs de vitesse de rotation peuvent prendre différentes formes de réalisation ou d'implantation sans sortir du cadre de l'invention. Dans toutes ces variantes, le paramètre des conditions de roulage mesuré et collecté par les appareils de mesure et de collecte 20 correspond à la vitesse de rotation instantanée.

Cette réalisation n'est pas exclusive et les appareils de mesure et de collecte 20 peuvent inclure des capteurs autres que des capteurs de vitesse, par exemple des capteurs de température, des capteurs de couple, des accéléromètres ou analogues. Dans ces réalisations, les paramètres sont la température, le couple, l'accélération, etc. De tels appareils de mesure et de collecte 20 avec de tels capteurs adaptés à de tels paramètres conviennent et sont inclus dans le cadre de l'invention, dès lors que le paramètre mesuré est susceptible de caractériser - après analyse - l'état structurel présent ou prévisionnel des unités de roulement.

Par ailleurs, les appareils de mesure et de collecte 20 peuvent également être capables de mesurer et collecter, simultanément ou successivement, les valeurs de plusieurs paramètres des conditions de roulage pour fournir lesdites données caractéristiques des conditions de roulage 20a.

Un appareil de mesure et de collecte 20 présente généralement au moins une partie substantielle placée dans un boîtier 22 propre.

Le boîtier 22 peut ainsi être fixé à l'engin 16 par tout moyen de fixation approprié. En particulier ce moyen de fixation peut être amovible ou rapporté de manière à permettre l'entretien et le remplacement des appareils de mesure et de collecte 20.

Selon une première forme de réalisation, illustrée par la figure 6A, le système de diagnostic 10 comprend une pluralité d'appareils de mesure et de collecte 20 agencés de sorte qu'un appareil de mesure et de collecte 20 est prévu propre à chacune desdites unités de roulement 12. Chaque appareil de mesure et de collecte 20 est alors associé à une unité de roulement 12 pour recueillir les valeurs du paramètre des conditions de roulage et fournir les données caractéristiques des conditions de roulage 20a correspondantes.

Chaque boîtier 22 est alors propre à une unique unité de roulement 12.

Selon une autre forme de réalisation, le système de diagnostic 10 comprend une pluralité d'appareils de mesure et de collecte 20 agencés de sorte qu'au moins un appareil de mesure et de collecte 20 est prévu pour partie commun à plusieurs unités de roulement 12. Dans ce cas de figure, le système de diagnostic 10 peut prévoir l'utilisation de moyens de transmission permettant de rassembler les données caractéristiques des conditions de roulage 20a au sein d'un même appareil de mesure et de collecte 20.

En particulier, selon la réalisation de la figure 6B, il est possible de prévoir l'utilisation d'un appareil de mesure et de collecte 20 au moins pour partie commun à deux unités de roulement 12 distinctes et reliées structurellement l'une et l'autre à un même essieu 15a. Dans ce cas, chaque boîtier 22 appartenant à un appareil de mesure et de collecte 20 est commun aux deux unités de roulement 12 fixées sur le même essieu 15a.

De manière similaire, selon la réalisation de la figure 6C, il est envisageable d'utiliser au moins un appareil de mesure et de collecte 20 au moins pour partie commun à quatre unités de roulement 12 distinctes mais reliées structurellement à un même boggie 15b appartenant à l'engin 16. Dans ce cas, chaque boîtier 22 appartenant à un appareil de mesure et de collecte 20 est commun aux quatre unités de roulement 12 fixées sur le même boggie 15b.

Dans une réalisation élémentaire, il est prévu, pour une unité de roulement 12, un unique appareil de mesure et de collecte 20. Mais, à des fins de contrôle ou de sécurité notamment, il peut être prévu, pour une unité de roulement 12, au moins deux appareils de mesure et de collecte 20, ou à tout le moins deux parties d'appareils. Ces appareils de mesure et de collecte 20 peuvent être montés en parallèle. Par exemple, dans une réalisation possible, il est prévu un appareil de mesure et de collecte 20 de haute résolution et un appareil de mesure et de collecte 20 de basse consommation électrique en particulier de basse résolution. Cet agencement est particulièrement bien adapté au cas où les moyens d'alimentation électrique des appareils de mesure et de collecte 20, sur lesquels on reviendra par la suite, sont autres que les moyens d'alimentation électrique de l'engin, étant propres à chaque appareil de mesure et de collecte 20 ou communs à plusieurs appareils de mesure et de collecte 20.

Le système de diagnostic 10 comporte également, des moyens de stockage de données 24 embarqués sur l'engin 16.

Ces moyens de stockage de données 24 sont en communication - filaire ou non filaire - avec les appareils de mesure et de collecte 20 et permettent de stocker, d'une part, les données caractéristiques des conditions de roulage 20a et, d'autre part, les données d'identification associées aux unités de roulement 12.

De cette manière, chacune des données caractéristiques des conditions de roulage 20a fournies par les appareils de mesure et de collecte 20 est stockée en association avec les données d'identification de l'unité de roulement 12 correspondante.

Il est ainsi possible de déterminer, ultérieurement, à quelle unité de roulement 12 correspond chacune des données caractéristiques des conditions de roulage 20a ou de l'information tirée de ces données.

Selon une première forme de réalisation, le système de diagnostic 10 comprend une pluralité de moyens de stockage de données 24 prévus propres à chaque appareil de mesure et de collecte 20.

Chacun des moyens de stockage de données 24 est alors capable de stocker les données caractéristiques des conditions de roulage 20a provenant l'appareil de mesure et de collecte 20 correspondant. En revanche, ledit moyen de stockage de données 24 n'est pas destiné à stocker les données caractéristiques des conditions de roulage 20a provenant d'autres appareils de mesure et de collecte 20.

Dans ce cas, illustré par les modes de réalisation des figures 1, 2, 3 et 5, les moyens de stockage de données 24 sont, de préférence, au moins partiellement associés structurellement aux boîtiers 22 recevant l'appareil de mesure et de collecte 20 correspondant.

Selon une forme de réalisation alternative, le système de diagnostic peut au contraire comprendre une pluralité de moyens de stockage 24 prévus communs à plusieurs appareils de mesure et de collecte 20.

Les moyens de stockage de données 24 sont alors partagés entre plusieurs appareils de mesure et de collecte 20, moyennant l'utilisation de moyens de transmission entre eux. Comme précédemment, lesdits moyens de stockage de données 24 peuvent ainsi être communs à plusieurs appareils de mesure et de collecte 20 d'un même essieu 15a ou bien d'un même boggie 15b.

Dans ce cas, illustré par la figure 4, les moyens de stockage de données 24 peuvent être rassemblés et localisés dans une même partie de l'engin 16, notamment vers l'avant de l'engin ou bien pour partie associés structurellement aux boîtiers 22 recevant les appareils de mesure et de collecte 20 correspondants.

Il convient également de signaler que, selon une réalisation, les moyens de stockage de données 24 stockent les données caractéristiques des conditions de roulage 20a pendant une période de temps qui correspondant à la période de temps entre deux recueils successifs de données par une unité de recueil (décrite ci-après).

À l'inverse, selon une réalisation alternative, lesdits moyens de stockage 24 peuvent stocker les données caractéristiques des conditions de roulage 20a pendant une période de temps correspondant à une durée préfixée, déterminée par l'opérateur mettant en oeuvre le système de diagnostic 10. Les moyens de stockage 24 sont alors vidés des données préalablement stockées à l'issue de la période de temps prédéterminée.

Dans une réalisation possible, le système de diagnostic 10 comprend également des moyens de stockage permanent de données, aptes à stocker toutes les données ou certaines d'entre elles, pour des raisons de sécurité, afin de pouvoir effectuer des constats, contrôles ou analyses *a posteriori.*

Le système de diagnostic 10 comporte aussi, embarqué sur l'engin 16, des moyens de communication de données 26 par liaison sans fil, ce qui doit être compris comme comprenant des moyens matériels structurels et un protocole de communication.

Ces moyens de communication de données 26 sont aptes à émettre des données, par liaison sans fil, dans une certaine zone de couverture 26a. Plus particulièrement, les moyens de communication de données 26 sont associés fonctionnellement aux moyens de stockage de données 24 de manière à permettre le transfert, par liaison sans fil et dans la zone de couverture, des données caractéristiques des conditions de roulage 20a et des données d'identification des unités de roulement 12.

À titre exemplatif et nullement limitatif, les moyens de communication de données 26 peuvent émettre ces données par liaison sans fil à courte distance, notamment dans une zone de couverture 26a présentant un rayon inférieur à environ 100 mètres, en particulier inférieur à environ 20 mètres.

De façon additionnelle ou alternative, il est possible de prévoir que les moyens de communication de données 26 émettent ces données par liaison sans fil à moyenne distance, notamment dans une zone de couverture 26a comprise entre environ 100 mètres et environ 500 mètres.

Il est en outre possible de prévoir de façon additionnelle ou alternative que les moyens de communication de données 26 émettent ces données par liaison sans fil à longue distance, notamment dans une zone de couverture 26a comprise entre environ 500 mètres et quelques kilomètres.

Selon une réalisation illustrée par les figures 1, 2, 3, 5 et 6A, les moyens de communication de données 26 sont au moins pour partie localisés vers la périphérie 16c de l'engin 16, et en particulier adjacents ou proches de la périphérie 16c de l'engin 16. De cette manière, les obstacles entre les moyens de communication de données 26 et l'extérieur de l'engin 16 sont réduits et les risques de défaillance lors de la communication sans fil sont limités.

Cependant, les moyens de communication de données 26 peuvent également être localisés vers la partie transversale médiane 16d de l'engin 16 - comme représenté par les figures 6B et 6C. C'est notamment le cas lorsqu'ils sont utilisés pour transmettre les données caractéristiques des conditions de roulage 20a et les données d'identification des unités de roulement provenant de plusieurs appareils de mesure et de collecte 20 différents et structurellement séparés.

Par ailleurs, selon une première forme de réalisation illustrée par les figures 1, 2, 3, et 5 le système de diagnostic 10 comprend une pluralité de moyens de communication de données 26 prévus propres à chaque unité de roulement 12.

Chacun des moyens de communication 26 est alors capable d'émettre les données caractéristiques des conditions de roulage 20a mesurées par l'appareil de mesure et de collecte 20 et stockées par les moyens de stockage de données 24 correspondants à cette unité de roulement 12. En revanche, lesdits moyens de communication 26 ne sont pas destinés à émettre les données caractéristiques des conditions de roulage 20a provenant des autres appareils de mesure et de collecte 20.

Dans ce cas, les moyens de communication de données 26 sont, de préférence, au moins partiellement associés structurellement aux boîtiers 22 recevant l'appareil de mesure et de collecte 20 et les moyens de stockage de données 24 correspondants.

Alternativement, selon une autre forme de réalisation illustrée par la figure 4, le système de diagnostic 10 comprend des moyens de communication de données 26 communs pour plusieurs unités de roulement 12, moyennant l'utilisation de moyens de transmission entre eux. Les moyens de communication de données 26 peuvent alors être communs à plusieurs unités de roulement 12 d'un même ensemble et, donc, répartis en plusieurs localisations de l'engin 16. Les moyens de communications de données 26 peuvent en outre être, comme dans la réalisation de la figure 4, communs à toutes les unités de roulement 12 et positionnés vers l'avant de l'engin 16 en une seule localisation.

Le système de diagnostic 10 selon l'invention comprend également, embarqué sur l'engin 16, des moyens d'alimentation électrique 28.

Ces moyens d'alimentation électrique 28 sont destinés à assurer l'alimentation en énergie électrique des appareils de mesure et de collecte de données 20, des moyens de stockage de données 24, des moyens de communication de données 26, etc.

Ainsi, les moyens d'alimentation électrique 28 peuvent être, selon une réalisation illustrée par les figures 1, 2, 3 et 5, propres aux appareils de mesure et de collecte de données 20, aux moyens de stockage de données 24, et/ou aux moyens de communication de données 26 dédiés à une unité de roulement 12. De cette manière, les moyens d'alimentation électrique 28 peuvent eux-aussi être regroupés dans un même boîtier 22 ce qui limite les besoins en câblage additionnel.

Cela étant dit, les moyens d'alimentation électrique 28 peuvent également, selon une réalisation illustrée par la figure 4, être communs à plusieurs appareils de mesure et de collecte de données 20, voir à plusieurs moyens de stockage de données 24, voir encore à plusieurs moyens de communication de données 26, voire même à l'alimentation électrique de l'engin 16.

Dans ce cas, de figure, il convient alors d'employer un câblage de distribution spécifique pour l'alimentation électrique 28.

Dans le cas moyens d'alimentation électrique 28 autres que ceux de l'engin et propres à chaque appareil de mesure et de collecte 20 ou communs à plusieurs appareils de mesure et de collecte 20, ces moyens d'alimentation électrique 28 peuvent être autonomes comme des batteries électriques ou comprendre ou être associés à des moyens de récupération d'énergie connus ou à la portée de l'homme du métier, tels que ceux mis en oeuvre par suite des mouvements de l'engin.

Dans une réalisation possible visant à pouvoir surveiller l'alimentation électrique, pour des raisons de sécurité, et alors que les moyens d'alimentation électrique 28 sont autres que ceux de l'engin et étant autonomes et propres à chaque appareil de mesure et de collecte 20 ou communs à plusieurs appareils de mesure et de collecte 20, il est prévu des moyens de contrôle et d'information de l'état de charge électrique des moyens d'alimentation électrique 28. Ces moyens de contrôle et d'information sont aptes à contrôler l'état de charge électrique des moyens d'alimentation 28, tel que, notamment, l'atteinte d'au moins un seuil inférieur de sécurité. Ils sont aptes, également, à fournir une information sur l'état de charge électrique des moyens d'alimentation électrique 28. Cette information est envoyée, selon les réalisations, à un moyen d'information embarqué sur l'engin, en particulier situé au voisinage desdits moyens d'alimentation électrique, ou aux moyens de communications de données 26, puis à l'unité de recueil de données 30 dont il sera question par la suite, ou à tous.

On a représenté sur la figure 8 une configuration possible dans laquelle le châssis 16a du véhicule 16 porte la pluralité d'unités de roulement 12, dont une seule est ici représentée, sur laquelle est monté à son tour l'essieu 15a, sur lequel sont montées à leur tour deux roues 14 d'axe 14a, dont une seule est ici représentée, chaque roue étant montée sur un rail 18. Solidaire du carter de l'unité de roulement 12 ou de la partie du châssis 16a dont il est adjacent, est le boîtier 22 qui comprend tout ou partie de l'appareil de mesure et de collecte 20, des moyens de stockage de données 24, des moyens d'alimentation électrique 28 éventuellement (s'ils sont propres et ce pour une alimentation autonome) et enfin des moyens de communication de données, ici vers la périphérie 16c de l'engin 16. Comme cela résulte de la description qui précède, cette configuration n'est pas limitative.

Ainsi, les figures 7A à 7N montrent que des modules formant tout ou partie de l'appareil de mesure et de collecte 20, des moyens de stockage de données 24, des moyens d'alimentation électrique 28, et des moyens de communication de données peuvent être propres à chaque unité de roulement 12, et donc chaque roue 14 (figures 7A, 7D, 7H et 7L) ou propres à un essieu 15a d'au moins une couple de roues 14 (figures 7B, 7E, 7I, 7H) ou propres à un boggie 15b d'au moins une couple d'essieux 15b (figures 7F, 7J, 7N). Il est possible bien entendu de combiner ces différentes réalisations entre elles.

Avec des réalisations telles que celles décrites, pour une unité de roulement 12 donnée (et ce pour chacune des unités de roulement 12 de la pluralité d'unités de roulement 12 l'engin 16), la mesure du paramètre, sa collecte, son traitement, le stockage des données caractéristiques du roulement et des données d'identification, la communication de celles-ci, et l'alimentation électrique, grâce aux moyens 20, 24, 26, 28 déjà décrits se font au plus près de l'unité de roulement 12 considérée, en évitant des moyens de liaison filaire de grande longueur tout le long de l'engin 16. Grâce à cela, les moyens du système de diagnostic 10 embarqués sur l'engin 16 peuvent être montés et installés après que l'engin 16 a été réalisé, par exemple sur les engins 16 d'un parc d'engins déjà existants.

Le système de diagnostic 10 comprend également au moins une unité de recueil de données 30. Il faut comprendre par-là que selon les réalisations, le système de diagnostic comporte une seule unité de recueil de données 30 ou bien qu'il en comporte plusieurs. Dans la suite du texte, lorsqu'il est question de la « une » unité de recueil de données, paramètre, il faut comprendre de la au moins une unité de recueil 30.

Selon l'invention, l'unité de recueil de données 30 est dissociée structurellement de l'engin 16 et apte à être positionnée structurellement par rapport à une voie du réseau de voies 18, dans la zone de couverture 26a des moyens de communications de données 26 embarqués sur l'engin 16.

De cette manière, l'unité de recueil de données 30 est apte à recueillir les données caractéristiques des conditions de roulage 20a et les données d'identifications transmises par les moyens de communication 26.

L'unité de recueil de données 30 peut recouvrir différentes formes de réalisation.

Selon une première forme de réalisation représentée par les figures 1 et 4, le système de diagnostic 10 peut comprendre une unité de recueil de données 30 qui soit fixe et disposée d'un côté ou de l'autre, le long de la voie appartenant au réseau de voies 18. Alternativement, le système de diagnostic 10 pourrait également comprendre une pluralité d'unités de recueil de données 30 qui soient fixes, disposées d'un côté ou de l'autre d'une ou plusieurs voies et réparties au moins grosso modo régulièrement par rapport au réseau de voies 18.

Chacun des moyens de communication de données 26 associé à une unité de roulement 12 est alors capable de transmettre, à la volée, les données caractéristiques des conditions de roulage 20a et les données d'identification des unités de roulement 12 en direction de l'unité de recueil de données 30, lorsque ladite unité de recueil 30 entre dans la zone de couverture 26a desdits moyens de communication de données 26.

Selon une deuxième forme de réalisation représentée par la figure 2, le système de diagnostic 10 peut également comprendre deux - ou plus - unités de recueil de données 30 qui soient fixes et disposées de part et d'autre de la voie appartenant au réseau de voies 18. Comme précédemment, le système de diagnostic 10 peut d'ailleurs prévoir de disposer plusieurs couples d'unité de recueil de données 30 le long d'une ou plusieurs voies et réparties au moins grosso modo régulièrement par rapport audit réseau de voies 18.

De la même manière que précédemment, chacun des moyens de communication de données 26 associé à une unité de roulement 12 est alors capable de transmettre, à la volée, les données caractéristiques des conditions de roulage 20a et les données d'identification de chaque unité de roulement 12 en direction de l'une et/ou l'autre des unités de recueil de données 30, lorsque ces dernières entrent dans la zone de couverture 26a des moyens de communication de données 26.

Selon une troisième forme de réalisation représentée par la figure 3, le système de diagnostic 10 comprend au moins une unité de recueil de données 30 déplaçable et, en particulier, transportable. Plus particulièrement, ladite unité de recueil de données 30 peut alors comprendre une partie portative 32 de mesure pouvant être aisément déplacée et positionnée dans la zone de couverture 26a des moyens de communication de données 26. Là encore, le système de diagnostic 10 peut prévoir l'utilisation de plusieurs unités de recueil de données 30, en particulier de plusieurs parties portatives 32 de mesure.

Ainsi, un ou plusieurs opérateurs peuvent se charger alternativement ou successivement de recueillir, à la volée ou lorsque l'engin 16 est à l'arrêt, les données caractéristiques des conditions de roulage 20a et les données d'identification de chacune des unités de roulement 12.

Dans ce cas de figure, l'unité de recueil de données 30 peut également comprendre une console d'accueil 34 apte à recevoir la partie portative 32 permettant de télécharger et éventuellement de traiter les données caractéristiques des conditions de roulage 20a et les données d'identification recueillies par la partie portative 32 de l'unité de recueil 30.

Selon une quatrième forme de réalisation représentée par la figure 5, le système de diagnostic comprend au moins une unique unité de recueil de données 30 fixe pour la totalité du réseau de voies 18.

Chacun des moyens de communication de données 26 associé à une unité de roulement 12 est alors capable de transmettre, à la volée, les données caractéristiques des conditions de roulage 20a et les données d'identification des unités de roulement 12 en direction de l'unité de recueil de données 30, lorsque ladite unité de recueil 30 entre dans la zone de couverture 26a desdits moyens de communication de données 26.

Il convient d'ajouter que selon ces différentes formes de réalisation, la ou les unité(s) de recueil 30 peuvent être associées à une voie où en situation normale l'engin 16 soit roule soit est à l'arrêt, le diagnostic étant alors effectué, respectivement, pour un engin 16 roulant ou un engin 16 à l'arrêt.

Le système de diagnostic 10 selon l'invention comprend aussi des moyens de calcul et d'analyse 36, dissociés structurellement de l'engin 16, ce qui permet d'éviter l'intégration, au sein cet engin 16, de moyens de calcul susceptibles de nécessiter d'importantes ressources énergétiques et de générer un encombrement supplémentaire. Par ailleurs, le fait de déporter ces moyens de calcul et d'analyse 36 par rapport à l'engin 16, permet également d'éviter l'utilisation d'un câblage additionnel pour les relier aux différents appareils de mesure et de collecte de données 20. Ainsi, un tel système de diagnostic 10 peut être intégré plus simplement à un engin 16 préexistant.

Les moyens de calcul et d'analyse 36 sont destinés et aptes à recevoir les données caractéristiques des conditions de roulage 20a et les données d'identification des unités de roulement 12 provenant de l'unité de recueil de données 30.

À cet égard, les moyens de calculs et d'analyse 36 peuvent être soit structurellement distincts de l'unité de recueil de données 30, soit structurellement associés à cette unité de recueil de données 30.

À partir des données caractéristiques des conditions de roulage et des données d'identification, d'une part, ainsi que d'au moins une valeur significative prédéterminée du - ou fonction du - paramètre caractéristique, d'autre part, les moyens de calcul et d'analyse 36 sont aptes à fournir une information de diagnostic de l'état structurel ou prévisionnel de chacune des unités de roulement 12 implantés sur l'engin 16.

Pour ce faire, et dans le cas d'un diagnostic de l'état structurel présent, les moyens de calcul et d'analyse 36 sont programmés de manière à mettre en oeuvre, dans une réalisation possible, tout ou partie du procédé de détection d'un défaut structurel tel qu'il résulte de l'enseignement du document FR2 944 875.

Dans le cas d'un diagnostic prévisionnel, les moyens de calcul et d'analyse 36 sont programmés de manière à mettre en oeuvre un procédé de prédiction qu'une unité de roulement 12 devrait atteindre un seuil significatif de l'état structurel considéré après une certaine rotation. Un tel procédé repose sur une loi d'évolution du paramètre des conditions de roulage de l'unité de roulement 12 en fonction de la rotation de celle-ci - en particulier le cumul du nombre de tours ou de la durée de rotation -.

D'autre part, selon une réalisation, les moyens de calcul et d'analyse 36 peuvent également contenir des moyens de communication de diagnostic capables de transmettre les informations de diagnostic soit à l'unité de recueil 30, soit à un moyen d'information embarqué sur l'engin 16. Une telle réalisation permet, en effet, de prévenir le conducteur de l'engin 16 ou bien les opérateurs positionnés à proximité de l'engin 16 qu'un défaut a été détecté sur l'une ou l'autre des unités de roulement 12.

À cet égard, le système de diagnostic selon l'invention peut également contenir des moyens d'expression visuelle et/ou sonore embarqués sur l'engin 16.

Ces moyens d'expression visuelle et/ou sonore sont aptes à recevoir et à fournir une information de diagnostic de l'état structurel présent ou prévisionnel de chacune des unités de roulement, en particulier une information de diagnostic critique. Ces moyens d'expression visuelle et/ou sonore sont, en particulier, aptes à communiquer avec l'unité de recueil 30 moyennant des moyens de communication, de sorte à recevoir de l'unité de recueil 30 ladite information de diagnostic.

Il convient, par ailleurs, de signaler que le système de diagnostic 10 selon l'invention peut également comporter une mémoire de stockage 40 des données caractéristiques.

La mémoire de stockage 40 est destinée stocker les données caractéristiques des conditions de roulage 20a recueillies par l'unité de recueil de données 30. Plus particulièrement, ladite mémoire de stockage peut être reliées électriquement, d'une part, à l'unité de recueil de données 30 et, d'autre part, aux moyens de calcul et d'analyse 36.

Ainsi, la mémoire de stockage 40 est dissociée structurellement du réseau de voies et de l'engin 16 et peut être associée fonctionnellement aux moyens de calcul et d'analyse 36 soit en étant proche, soit en étant distante de la localisation de ces moyens de calcul et d'analyse 36.

L'invention a également pour objet le procédé de mise en oeuvre du système de diagnostic 10 précédemment décrit.

Ce procédé s'infère du système 10 lui-même.

Ce procédé est tel que, moyennant tout d'abord la mise en oeuvre des appareils de mesure et de collecte 20, l'on mesure dans le temps la valeur d'au moins un paramètre des conditions de roulage des unités de roulement 12, caractéristique de leur état structurel et on fournit des données caractéristiques des conditions de roulage de chacune des unités de roulement 12.

Moyennant la mise en oeuvre des moyens de stockage de données 24, l'on stocke lesdites données caractéristiques et les données d'identification.

Moyennant la mise en oeuvre des moyens de communication de données 26 et de l'unité de recueil 30, l'on transfère lesdites données caractéristiques et les données d'identification stockées à l'unité de recueil de données 30, alors que l'unité de recueil est positionnée structurellement dans la zone de couverture des moyens de communication de données 26.

Enfin, moyennant la mise en oeuvre des moyens de calcul et d'analyse 36, on fournit l'information de diagnostic de l'état structurel présent ou prévisionnel de chacune des unités de roulement 12 implantées sur l'engin à roues 16.

Comme il a été déjà indiqué, l'on associe l'unité de recueil 30 à une voie 18 où en situation normale l'engin 16 roule ou bien alors que l'engin 16 est à l'arrêt. Ainsi, l'on effectue le diagnostic, respectivement, pour un engin 16 roulant ou un engin 16 à l'arrêt.

## Revendications

1. Système de diagnostic (10) de l'état structurel d'une pluralité d'unités de roulement (12), chacune ayant une donnée d'identification propre, implantées sur un engin à roues (16) pour son déplacement sur un réseau de voies (18), en particulier un train, qui comprend:
▪ des appareils de mesure et de collecte (20) dans le temps de la valeur d'au moins un paramètre des conditions de roulage des unités de roulement (12) caractéristique de leur état structurel, associés structurellement et fonctionnellement à la pluralité d'unités de roulement (12), embarqués sur l'engin (16), aptes à mesurer et collecter les valeurs dudit paramètre et à fournir des données caractéristiques des conditions de roulage de chacune des unités de roulement (12), moyennant, le cas échéant, des moyens de traitement associés fonctionnellement,
▪ des moyens de stockage de données (24), embarqués sur l'engin (16), aptes à stocker lesdites données caractéristiques fournies par les appareils de mesure et de collecte (20) et les données d'identification des unités de roulement (12),
▪ des moyens de communication de données (26) par liaison sans fil, embarqués sur l'engin (16),
▪ au moins une unité de recueil de données (30), dissociée structurellement de l'engin (16),
▪ des moyens de calcul et d'analyse (36),
**caractérisé en ce que :**
▪ les moyens de communication de données (26) par liaison sans fil dans une certaine zone de couverture sont associés fonctionnellement aux moyens de stockage de données (24) et aptes à transférer lesdites données caractéristiques et les données d'identification stockées,
▪ la au moins une unité de recueil de données (30) est apte à être positionnée structurellement par rapport à une voie (18) dans la zone de couverture des moyens de communication (26) embarqués sur l'engin (16) se trouvant sur cette voie (18) et à recueillir ainsi lesdites données caractéristiques et les données d'identification stockées,
▪ les moyens de calcul et d'analyse (36) sont dissociés structurellement de l'engin (16), aptes à être associés fonctionnellement à l'unité de recueil (30) et aptes, à partir desdites données caractéristiques et d'au moins une valeur significative prédéterminée du - ou fonction du - paramètre caractéristique, à fournir une information de diagnostic de l'état structurel présent ou prévisionnel de chacune des unités de roulement (12).

2. Système de diagnostic (10) selon la revendication 1, comprenant des moyens de communication de données (26) par liaison sans fil à courte distance inférieure à environ 100 mètres, plus particulièrement inférieure à environ 20 mètres, et/ou à moyenne distance comprise entre environ 100 mètres et environ 500 mètres, et/ou à longue distance comprise entre environ 500 mètres et quelques kilomètres.

3. Système de diagnostic (10) selon l'une quelconque des revendications 1 et 2, dans lequel les moyens de communication (26) sont au moins pour partie localisés, soit vers la périphérie de l'engin (16), et en particulier adjacents ou proches de la périphérie de l'engin (16), soit vers la partie de l'engin (16) où se trouvent les unités de roulement (12), et en particulier la partie inférieure de l'engin (16), soit vers l'avant de l'engin (16).

4. Système de diagnostic (10) selon l'une quelconque des revendications 1 à 3, qui soit comprend des moyens de communication de données (24) en plusieurs localisations soit comprend des moyens de communication de données (24) en une seule localisation.

5. Système de diagnostic (10) selon l'une quelconque des revendications 1 à 4, dans lequel une unité de recueil de données (30) soit est fixe soit est déplaçable, en particulier transportable, plus spécialement portable en tout ou partie tel qu'une partie portative de mesure et une partie formant console d'accueil.

6. Système de diagnostic (10) selon l'une quelconque des revendications 1 à 5, dans lequel en position de recueil une unité de recueil (30) est disposée le long d'une voie (18) du réseau, d'un côté ou des deux côtés de ladite voie (18), en particulier en vis-à-vis, ou dans la région où plusieurs voies (18) du réseau sont structurellement proches les unes des autres.

7. Système de diagnostic (10) selon l'une quelconque des revendications 1 à 6, qui soit comprend une unique unité de recueil (30) pour la totalité du réseau de voies soit comprend une pluralité d'unités de recueil (30), en particulier une pluralité d'unités de recueil (30) réparties par rapport au réseau de voies (18), et plus spécialement réparties au moins grosso modo régulièrement.

8. Système de diagnostic (10) selon l'une quelconque des revendications 1 à 7, dans lequel une unité de recueil (30) est associée à une voie (18) où en situation normale l'engin (16) soit roule soit est à l'arrêt, le diagnostic étant effectué, respectivement, pour un engin (16) roulant ou un engin (16) à l'arrêt.

9. Système de diagnostic (10) selon l'une quelconque des revendications 1 à 8, qui soit comprend une pluralité d'appareils de mesure et de collecte (20) de sorte qu'un appareil de mesure et de collecte (20) est prévu propre à chaque unité de roulement (12) de la pluralité d'unités de roulement (12) soit comprend des appareils de mesure et de collecte (20) pour partie communs à plusieurs unités de roulement (12) de la pluralité d'unités de roulement (12), moyennant des moyens de transmission entre eux, en particulier communs à plusieurs unités de roulement (12) d'un ensemble tel qu'un essieu ou un boggie.

10. Système de diagnostic (10) selon l'une quelconque des revendications 1 à 9, qui, pour une unité de roulement (12), comprend soit un unique appareil de mesure et de collecte (20) soit au moins deux appareils de mesure et de collecte (20).

11. Système de diagnostic (10) selon la revendication 10, qui, pour une unité de roulement (12), comprend au moins deux appareils de mesure et de collecte (20), montés en parallèle, en particulier un appareil de mesure et de collecte (20) de haute résolution et un appareil de mesure et de collecte (20) de basse consommation électrique, en particulier de basse résolution, en particulier lorsque les moyens d'alimentation électrique (28) des appareils de mesure et de collecte (20) sont autres que les moyens d'alimentation électrique de l'engin (16), étant propres à chaque appareil de mesure et de collecte (20) ou communs à plusieurs appareils de mesure et de collecte (20).

12. Système de diagnostic (10) selon l'une quelconque des revendications 1 à 11, qui soit comprend une pluralité de moyens de stockage de données (24) de sorte que des moyens de stockage de données (24) sont prévus propres à chaque appareil de mesure et de collecte (20), les moyens de stockage de données (24) stockant lesdites données caractéristiques de l'appareil de mesure et de collecte (20) correspondant mais non celles des autres appareils de mesure et de collecte (20) soit comprend des moyens de stockage de données (24) partagés entre plusieurs appareils de mesure et de collecte (20), moyennant des moyens de transmission entre eux, en particulier soit communs à plusieurs appareils de mesure et de collecte (20) d'un ensemble tel qu'un essieu ou un boggie soit communs à tous les appareils de mesure, collecte et stockage.

13. Système de diagnostic (10) selon l'une quelconque des revendications 1 à 12, qui comprend des moyens de stockage de données (24) pendant une période de temps qui soit correspond à la période de temps entre deux recueils successifs de donnés par une unité de recueil (30) soit correspond à une durée préfixée fixée par l'opérateur mettant en oeuvre le système de diagnostic (10), les moyens de stockage (24) étant vidés des données préalablement stockées à l'issue de la période de temps, et/ou des moyens de stockage permanent de données.

14. Système de diagnostic (10) selon l'une quelconque des revendications 1 à 13, dans lequel un appareil de mesure et de collecte (20) est au moins pour une partie substantielle placé dans un boîtier propre (22), fixé à l'engin (16), en particulier un boîtier (22) fixé de façon amovible ou rapporté, les moyens de communication de données (26) et/ou les moyens de stockage de données (24) étant, le cas échéant, au moins pour partie, associés structurellement au boîtier (22) correspondant.

15. Système de diagnostic (10) selon l'une quelconque des revendications 1 à 14, avec des moyens d'alimentation électrique (28) des appareils de mesure et de collecte (20) étant autres que les moyens d'alimentation électrique de l'engin (16) et étant propres à chaque appareil de mesure et de collecte (20) ou communs à plusieurs appareils de mesure et de collecte (20), les moyens d'alimentation électrique (28) étant autonomes comme des batteries électriques ou comprennent des moyens de récupération d'énergie.

16. Système de diagnostic (10) selon l'une quelconque des revendications 1 à 15, comprenant en outre une mémoire de stockage (40) desdites données caractéristiques, associée fonctionnellement aux moyens de calcul et d'analyse (36), et dissociée structurellement - et pouvant être le cas échéant distants - du réseau de voies (18) et de l'engin (16), la mémoire de stockage (40) étant dans une localisation qui, par rapport à la localisation des moyens de calcul et d'analyse (36), soit est proche soit est distante, moyennant des moyens de communication entre eux.

17. Système de diagnostic (10) selon l'une quelconque des revendications 1 à 16, dans lequel les moyens de calcul et d'analyse (36) sont programmés de manière, à partir des données caractéristiques des conditions de roulage des unités de roulement (12), à mettre en oeuvre tout ou partie d'un procédé de détection d'une anomalie structurelle des unités de roulement (12), et/ou à mettre en oeuvre un procédé de prédiction qu'une unité de roulement (12) devrait atteindre un seuil significatif de l'état structurel considéré après une certaine rotation, selon une loi d'évolution du paramètre des conditions de roulage de l'unité de roulement (12) en fonction de la rotation de celle-ci.

18. Système de diagnostic (10) selon l'une quelconque des revendications 1 à 17, dans lequel les moyens de calcul et d'analyse (36) soit sont structurellement distincts de l'unité de recueil (30) et aptes à recevoir lesdites données caractéristiques depuis l'unité de recueil (30) moyennant des moyens de communication soit sont structurellement associés à l'unité de recueil (30).

19. Système de diagnostic (10) selon l'une quelconque des revendications 1 à 18, dans lequel les moyens de calcul et d'analyse (36) sont aptes à transmettre les informations de diagnostic à l'unité de recueil (30) et/ou à un moyen d'information embarqué sur l'engin (16), moyennant le cas échéant des moyens de communication de diagnostic.

20. Système de diagnostic (10) selon l'une quelconque des revendications 1 à 19, qui comporte, en outre, des moyens d'expression visuelle et/ou sonore embarqués sur l'engin (16), aptes à recevoir et à fournir une information de diagnostic de l'état structurel présent ou prévisionnel de chacune des unités de roulement (12), en particulier une information de diagnostic critique, en particulier aptes à communiquer avec l'unité de recueil (30) moyennant des moyens de communication, de sorte à recevoir de l'unité de recueil (30) ladite information de diagnostic.

21. Système de diagnostic (10) selon l'une quelconque des revendications 1 à 20, dans lequel l'état structurel présent ou prévisionnel diagnostiqué est une altération de l'unité de roulement (12), tel qu'un écaillage ou analogue, en particulier la présence ou non d'une telle altération, et/ou le degré d'importance d'une telle altération, ou une altération de la cage du roulement.

22. Système de diagnostic (10) selon l'une quelconque des revendications 1 à 21, dans lequel le paramètre des conditions de roulage d'une unité de roulement (12) caractéristique de son état structurel est la vitesse instantanée de rotation de l'unité de roulement (12), les appareils de mesure et de collecte (20) étant des capteurs de vitesse de rotation instantanée aptes à mesurer la vitesse de rotation instantanée d'une unité de roulement (12).

23. Procédé de mise en oeuvre d'un système de diagnostic (10) de l'état structurel d'une pluralité d'unités de roulement (12), chacune ayant une donnée d'identification propre, implantées sur un engin à roues (16) pour son déplacement sur un réseau de voies (18), en particulier un train, selon l'une quelconque des revendications 1 à 22, dans lequel :
▪ moyennant la mise en oeuvre des appareils de mesure et de collecte (20), on mesure et on collecte dans le temps la valeur d'au moins un paramètre des conditions de roulage des unités de roulement (12), caractéristique de leur état structurel et on fournit des données caractéristiques des conditions de roulage de chacune des unités de roulement (12),
▪ moyennant la mise en oeuvre des moyens de stockage de données (24), on stocke lesdites données caractéristiques et les données d'identification,
▪ moyennant la mise en oeuvre des moyens de communication de données (26) et de l'unité de recueil (30), on transfère lesdites données caractéristiques et les données d'identification stockées à l'unité de recueil de données (30), alors que l'unité de recueil (30) est positionnée structurellement dans la zone de couverture des moyens de communication (26),
▪ moyennant la mise en oeuvre des moyens de calcul et d'analyse (36), associés fonctionnellement à l'unité de recueil (30), et à partir desdites données caractéristiques de l'unité de recueil de données (30) et d'au moins une valeur significative prédéterminée du - ou fonction du - paramètre caractéristique, on fournit une information de diagnostic de l'état structurel présent ou prévisionnel de chacune des unités de roulement (12) implantées sur l'engin (16).

## Patentansprüche

1. Diagnosesystem (10) für den strukturellen Zustand einer Mehrzahl von jeweils mit einer eigenen Identifizierungskennung ausgestatteten Rolleinheiten (12), die an einer Vorrichtung auf Rädern (16) für deren Verlagerung auf einem Streckennetz (18) eingesetzt sind, insbesondere an einem Zug, umfassend:
- Einrichtungen zum Messen und Sammeln (20), mit der Zeit, des Werts von wenigstens einem Parameter von Rollbedingungen der Rolleinheiten (12), der charakteristisch ist für ihren strukturellen Zustand, die strukturell und funktionell mit der Mehrzahl von Rolleinheiten (12) verbunden sind, sich an Bord der Vorrichtung (16) befinden, dazu geeignet sind, die Werte des Parameters zu messen und zu sammeln, und charakteristische Daten für die Rollbedingungen von jeder der Rolleinheiten (12) zu liefern, gegebenenfalls durch funktionell verbundene Verarbeitungsmittel,
- Datenspeichermittel (24) an Bord der Vorrichtung (16), die dazu geeignet sind, die von den Einrichtungen zum Messen und Sammeln (20) gelieferten charakteristischen Daten sowie die Identifizierungskennungen der Rolleinheiten (12) zu speichern,
- Mittel zur drahtlosen Daten-Kommunikation (26) an Bord der Vorrichtung (16),
- wenigstens eine strukturell von der Vorrichtung (16) getrennte Datenerfassungseinheit (30),
- Berechnungs- und Analysemittel (36),
**dadurch gekennzeichnet, dass**
- die Mittel zur drahtlosen Daten-Kommunikation (26) in einem bestimmten Abdeckungsbereich funktionell mit den Datenspeichermitteln (24) verbunden und dazu geeignet sind, die gespeicherten charakteristischen Daten und Identifizierungskennungen zu übertragen,
- die wenigstens eine Datenerfassungseinheit (30) dazu geeignet ist, strukturell in Bezug auf eine Strecke (18) im Abdeckungsbereich der Kommunikationsmittel (26) an Bord der Vorrichtung (16), die sich auf dieser Strecke (18) befindet, positioniert zu sein/zu werden, und so die gespeicherten charakteristischen Daten und Identifizierungskennungen zu erfassen,
- die Berechnungs- und Analysemittel (36) strukturell von der Vorrichtung (16) getrennt sind, dazu geeignet sind, funktionell mit der Erfassungseinheit (30) verbunden zu werden und dazu geeignet sind, um ausgehend von den charakteristischen Daten und von wenigstens einem vorbestimmten bedeutsamen Wert - oder als Funktion - des charakteristischen Parameters eine Diagnose-Information über den gegenwärtigen oder voraussichtlichen strukturellen Zustand von jeder der Rolleinheiten (12) zu liefern.

2. Diagnosesystem (10) nach Anspruch 1, umfassend Mittel zur drahtlosen Datenkommunikation (26) auf kurze Distanz kleiner als etwa 100 m, insbesondere kleiner als etwa 20 m oder/und auf mittlere Distanz zwischen etwa 100 m und etwa 500 m oder/und auf lange Distanz zwischen etwa 500 m und einigen Kilometern.

3. Diagnosesystem (10) nach einem der Ansprüche 1 und 2, wobei die Kommunikationsmittel (26) wenigstens teilweise entweder zum Randbereich der Vorrichtung (16) hin, und insbesondere benachbart oder nahe dem Randbereich der Vorrichtung (16), oder zu dem Teil der Vorrichtung (16) hin, wo sich die Rolleinheiten (12) befinden, und insbesondere zu dem unteren Teil der Vorrichtung (16) hin, oder zu dem vorderen Bereich der Vorrichtung (16) hin lokalisiert sind.

4. Diagnosesystem (10) nach einem der Ansprüche 1 bis 3, welches entweder Mittel zur Datenkommunikation (24) an mehreren Orten umfasst oder Mittel zur Datenkommunikation (24) an einem einzigen Ort umfasst.

5. Diagnosesystem (10) nach einem der Ansprüche 1 bis 4, wobei eine Datenerfassungseinheit (30) entweder fest oder verlagerbar ist, insbesondere transportabel, noch spezieller ganz oder teilweise tragbar, beispielsweise mit einem tragbaren Teil zur Messung und einem Teil, welches eine Aufnahmekonsole bildet.

6. Diagnosesystem (10) nach einem der Ansprüche 1 bis 5, wobei in einer Erfassungsposition eine Erfassungseinheit (30) entlang einer Strecke (18) des Netzes auf einer Seite oder beiden Seiten der Strecke (18) angeordnet ist, insbesondere gegenüber oder in dem Bereich, wo mehrere Strecken (18) des Netzes einander strukturell nahe sind.

7. Diagnosesystem (10) nach einem der Ansprüche 1 bis 6, welches entweder eine einzige Erfassungseinheit (30) für die Gesamtheit des Streckennetzes umfasst, oder eine Mehrzahl von Erfassungseinheiten (30) umfasst, insbesondere eine Mehrzahl von Erfassungseinheiten (30), die in Bezug auf das Streckennetz (18) verteilt sind, und noch spezieller wenigstens grob regelmäßig verteilt sind.

8. Diagnosesystem (10) nach einem der Ansprüche 1 bis 7, wobei eine Erfassungseinheit (30) einer Strecke (18) zugeordnet ist, wo in einer normalen Situation die Vorrichtung (16) entweder fährt oder sich im Stillstand befindet, wobei die Diagnose jeweils für eine Vorrichtung (16) in Fahrt oder für eine Vorrichtung (16) im Stillstand durchgeführt wird.

9. Diagnosesystem (10) nach einem der Ansprüche 1 bis 8, welches entweder eine Mehrzahl von Einrichtungen zum Messen und Sammeln (20) umfasst, so dass eine Einrichtung zum Messen und Sammeln (20) eigens für jede Rolleinheit (12) der Mehrzahl von Rolleinheiten (12) vorgesehen ist, oder Einrichtungen zum Messen und Sammeln (20) umfasst, die teilweise für mehrere Rolleinheiten (12) der Mehrzahl von Rolleinheiten (12) gemeinsam vorgesehen sind, durch Übertragungsmittel zwischen diesen, insbesondere für mehrere Rolleinheiten (12) einer Gesamtheit, beispielsweise einer Achse oder eines Drehgestells.

10. Diagnosesystem (10) nach einem der Ansprüche 1 bis 9, welches, für eine Rolleinheit (12) entweder eine einzige Einrichtung zum Messen und Sammeln (20) oder wenigstens zwei Einrichtungen zum Messen und Sammeln (20) umfasst.

11. Diagnosesystem (10) nach Anspruch 10, welches, für eine Rolleinheit (12), wenigstens zwei Einrichtungen zum Messen und Sammeln (20) umfasst, die parallel montiert sind, insbesondere eine Einrichtung zum Messen und Sammeln (20) mit hoher Auflösung und eine Einrichtung zum Messen und Sammeln (20) mit niedrigem elektrischen Verbrauch, insbesondere mit niedriger Auflösung, insbesondere dann, wenn die Mittel zur elektrischen Versorgung (28) der Einrichtungen zum Messen und Sammeln (20) andere sind als die Mittel zur elektrischen Versorgung der Vorrichtung (16), eigens für jeden Einrichtung zum Messen und Sammeln (20) oder gemeinsam für mehrere Einrichtungen zum Messen und Sammeln (20).

12. Diagnosesystem (10) nach einem der Ansprüche 1 bis 11, welches entweder eine Mehrzahl von Datenspeichermitteln (24) umfasst, so dass für jede Einrichtung zum Messen und Sammeln (20) eigene Datenspeichermittel (24) vorgesehen sind, wobei die Datenspeichermittel (24) die charakteristischen Daten der entsprechenden Einrichtung zum Messen und Sammeln (20) speichern, aber nicht diejenigen von anderen Einrichtungen zum Messen und Sammeln (20), oder Mittel zur Datenspeicherung (24) umfasst, die zwischen mehreren Einrichtungen zum Messen und Sammeln (20) geteilt werden, durch Übertragungsmittel zwischen diesen, und insbesondere solchen, die für mehrere Einrichtungen zum Messen und Sammeln (20) von einer Gesamtheit gemeinsam vorgesehen sind, beispielsweise von einer Achse oder einem Drehgestell, oder gemeinsam für alle Einrichtungen zum Messen, Sammeln und Speichern.

13. Diagnosesystem (10) nach einem der Ansprüche 1 bis 12, welches Mittel zur Datenspeicherung (24) während einer Zeitdauer umfasst, die entweder der Zeitdauer zwischen zwei aufeinanderfolgenden Datenerfassungen durch eine Erfassungseinheit (30) entspricht, oder einer zuvor durch den das Diagnosesystem (10) einsetzenden Betreiber festgelegten Dauer entspricht, wobei die Speichermittel (24) von zuvor gespeicherten Daten am Ende der Zeitdauer geleert werden oder/und Mittel zur permanenten Datenspeicherung.

14. Diagnosesystem (10) nach einem der Ansprüche 1 bis 13, wobei eine Einrichtungen zum Messen und Sammeln (20) wenigstens für einen substantiellen Teil in einem eigenen Gehäuse (22) platziert ist, das an der Vorrichtung (16) befestigt ist, insbesondere einem Gehäuse (22) das in entfernbarer oder angesetzter Weise fixiert ist, wobei die Datenkommunikationsmittel (26) oder/und die Datenspeichermittel (24) gegebenenfalls wenigstens teilweise strukturell mit dem entsprechenden Gehäuse (22) verbunden sind.

15. Diagnosesystem (10) nach einem der Ansprüche 1 bis 14, wobei Mittel zur elektrischen Versorgung (28) der Einrichtungen zum Messen und Sammeln (20) andere sind als die Mittel zur elektrischen Versorgung der Vorrichtung (16) und für jede Einrichtung zum Messen und Sammeln (20) eigene Mittel zur elektrischen Versorgung vorgesehen sind oder Mittel zur elektrischen Versorgung gemeinsam für mehrere Einrichtungen zum Messen und Sammeln (20) vorgesehen sind, wobei die Mittel zur elektrischen Versorgung (28) autonom sind, wie elektrische Batterien, oder Mittel zur Energierückgewinnung umfassen.

16. Diagnosesystem (10) nach einem der Ansprüche 1 bis 15, weiterhin umfassend einen Speicher (40) zum Speichern der charakteristischen Daten, der funktionell mit den Berechnungs- und Analysemitteln (36) verbunden und strukturell von dem Streckennetz (18) und der Vorrichtung (16) getrennt ist und gegebenenfalls davon entfernt sein kann, wobei der Speicher (40) zum Speichern sich an einem Ort befindet, der in Bezug auf den Ort der Berechnungs- und Analysemittel (36) entweder nah oder entfernt ist, durch Kommunikationsmittel zwischen diesen.

17. Diagnosesystem (10) nach einem der Ansprüche 1 bis 16, wobei die Berechnungs- und Analysemittel (36) so programmiert sind, dass ausgehend von den charakteristischen Daten der Rollbedingungen der Rolleinheiten (12) ganz oder teilweise ein Verfahren zur Erfassung einer strukturellen Anomalie der Rolleinheiten (12) durchgeführt wird, oder/und dass ein Verfahren durchgeführt wird, um vorherzusagen, dass eine Rolleinheit (12) einen wesentlichen Schwellenwert für den betreffenden strukturellen Zustand erreichen sollte, nach einer bestimmten Drehung, gemäß einem Entwicklungsgesetz des Parameters für die Rollbedingungen der Rolleinheit (12) als Funktion der Rotation von dieser.

18. Diagnosesystem (10) nach einem der Ansprüche 1 bis 17, wobei die Berechnungs- und Analysemittel (36) strukturell von der Erfassungseinheit (30) getrennt sind und dazu geeignet sind, die charakteristischen Daten von der Erfassungseinheit (30) zu empfangen, vermittels Kommunikationsmitteln, oder strukturell mit der Datenerfassungseinheit (30) verbunden sind.

19. Diagnosesystem (10) nach einem der Ansprüche 1 bis 18, wobei die Berechnungs- und Analysemittel (36) dazu geeignet sind, die Diagnoseinformationen zu der Erfassungseinheit (30) oder zu einem Informationsmittel an Bord der Vorrichtung (16) zu übertragen, gegebenenfalls mittels Diagnose-Kommunikationsmitteln.

20. Diagnosesystem (10) nach einem der Ansprüche 1 bis 19, welches weiterhin Mittel zur visuellen Äußerung oderAudio-Äußerung an Bord der Vorrichtung (16) umfassen, die dazu geeignet sind, eine Diagnose-Information über den gegenwärtigen oder voraussichtlichen strukturellen Zustand von jeder der Rolleinheiten (12) zu empfangen und zu liefern, insbesondere eine kritische Diagnose-Information, und die insbesondere dazu geeignet sind, mit der Erfassungseinheit (30) zu kommunizieren, mittels Kommunikationsmitteln, so dass von der Erfassungseinheit (30) die Diagnose-Information empfangen wird.

21. Diagnosesystem (10) nach einem der Ansprüche 1 bis 20, wobei der diagnostizierte aktuelle oder voraussichtliche strukturelle Zustand eine Veränderung der Rolleinheit (12) ist, etwa ein Abblättern/Abplatzen oder entsprechendes, insbesondere das Vorliegen oder Nicht-Vorliegen einer derartigen Änderung oder/und das Ausmaß der Bedeutung einer solchen Änderung oder eine Änderung des Rollkäfigs.

22. Diagnosesystem (10) nach einem der Ansprüche 1 bis 21, wobei der Parameter der Rollbedingungen einer Rolleinheit (12), der charakteristisch für deren strukturellen Zustand ist, die momentane Rotationsgeschwindigkeit der Rolleinheit (12) ist, wobei die Einrichtungen zum Messen und Sammeln (20) Sensoren für eine momentane Rotationsgeschwindigkeit sind, die dazu geeignet sind, die momentane Rotationsgeschwindigkeit einer Rolleinheit (12) zu messen.

23. Verfahren zum Einsatz eines Diagnosesystems (10) für den strukturellen Zustand einer Mehrzahl von Rolleinheiten (12), wobei jede eine eigene Identifizierungskennung hat, eingesetzt auf einer Vorrichtung mit Rädern (16) für deren Verlagerung auf einem Streckennetz (18), insbesondere auf einem Zug, nach einem der Ansprüche 1 bis 22, wobei:
- durch den Einsatz der Einrichtungen zum Messen und Sammeln (20) der Wert von wenigstens einem Parameter für Rollbedingungen der Rolleinheiten (12) gemessen und mit der Zeit gesammelt wird, der charakteristisch für deren strukturellen Zustand ist, und die charakteristischen Daten der Rollbedingungen von jeder der Rolleinheiten (12) geliefert werden,
- durch den Einsatz der Datenspeichermittel (24) die charakteristischen Daten und die Identifizierungskennungen gespeichert werden,
- durch den Einsatz der Datenkommunikationsmittel (26) und der Erfassungseinheit (30) die gespeicherten charakteristischen Daten und Identifizierungskennungen zu der Datenerfassungseinheit (30) übertragen werden, während sich die Erfassungseinheit (30) strukturell in dem Abdeckungsbereich der Kommunikationsmittel (26) befindet,
- durch den Einsatz der Berechnungs- und Analysemittel (36), die funktionell der Erfassungseinheit (30) zugeordnet sind, und ausgehend von den charakteristischen Daten von der Datenerfassungseinheit (30) und von mindestens einem vorbestimmten bedeutsamen Wert - oder als Funktion - des charakteristischen Parameters eine Diagnose-Information über den gegenwärtigen oder voraussichtlichen strukturellen Zustand von jeder der Rolleinheiten (12) geliefert wird, die an der Vorrichtung (16) eingesetzt sind.

## Claims

1. System (10) for diagnosing the structural condition of a plurality of rolling units (12), each having a unique identifying datum, mounted on a machine (16) having wheels in order to move it on a network of tracks (18), in particular a train, comprising:
▪ apparatuses (20) for measuring and collecting, over time, the value of at least one parameter pertaining to the rolling conditions of the rolling units (12) characteristic of their structural condition, structurally and functionally associated with the plurality of rolling units (12), installed on board the machine (16), configured to measure and collect the values of said parameter and supply data characteristic of the rolling conditions of each of the rolling units (12), if necessary with the aid of functionally associated processing means,
▪ data storage means (24) installed on board the machine (16), configured to store said characteristic data supplied by the measuring and collecting apparatuses (20) and the identification data of the rolling units (12),
▪ means (26) for communicating data via a wireless link, installed on board the machine (16),
▪ at least one data collection unit (30), structurally dissociated from the machine (16),
▪ calculation and analysis means (36),
**characterised in that**:
▪ the means for communicating data (26) via a wireless link within a certain coverage area are functionally associated with the data storage means (24) and configured to transfer said characteristic data and the stored identification data,
▪ the at least one data collection unit (30) is configured to be structurally positioned relative to a track (18) in the coverage area of the communication means (26) installed on board the machine (16) located on this track (18) and thus collect said characteristic data and the stored identification data,
▪ the calculation and analysis means (36) are structurally dissociated from the machine (16), configured to be functionally associated with the collection unit (30) and configured, on the basis of said characteristic data and at least one predetermined significant value of - or as a function of - the characteristic parameter, to supply diagnostic information pertaining to the current or projected structural condition of each of the rolling units (12).

2. Diagnostic system (10) as claimed in claim 1, comprising means (26) for communicating data via a wireless link across a short distance of less than about 100 metres, more particularly less than about 20 metres, and/or across a medium distance of between about 100 metres and about 500 metres, and/or across a long distance of between about 500 metres and a few kilometres.

3. Diagnostic system (10) as claimed in any one of claims 1 and 2, wherein the communication means (26) are located at least partly either towards the periphery of the machine (16) and in particular adjacent to or close to the periphery of the machine (16), towards the part of the machine (16) where the rolling units (12) are located and in particular the bottom part of the machine (16), or towards the front of the machine (16).

4. Diagnostic system (10) as claimed in any one of claims 1 to 3, comprising data communication means (26) in several locations or comprising data communication means (26) in a single location.

5. Diagnostic system (10) as claimed in any one of claims 1 to 4, wherein a data collection unit (30) is either stationary or displaceable, in particular transportable, more particularly entirely or partially portable, for example having a portable measuring part and a part constituting a docking console.

6. Diagnostic system (10) as claimed in any one of claims 1 to 5, wherein in the collecting position, a collection unit (30) is disposed along a track (18) of the network, on one side or both sides of said track (18), in particular in a mutually facing arrangement, or in the region where several tracks (18) of the network are structurally close to one another.

7. Diagnostic system (10) as claimed in any one of claims 1 to 6, comprising either a single collection unit (30) for the entirety of the network of tracks or comprising a plurality of collection units (30), in particular a plurality of collection units (30) distributed throughout the network of tracks (18) and more particularly distributed grosso modo at least regularly.

8. Diagnostic system (10) as claimed in any one of claims 1 to 7, wherein a collection unit (30) is associated with a track (18) where, in a normal situation, the machine (16) is either rolling or is stationary, the diagnosis being implemented respectively for a rolling machine (16) or a stationary machine (16).

9. Diagnostic system (10) as claimed in any one of claims 1 to 8, comprising either a plurality of measuring and collecting apparatuses (20), in which case a unique measuring and collecting apparatus (20) is provided for each rolling unit (12) of the plurality of rolling units (12), or comprising measuring and collecting apparatuses (20) which are partly common to several rolling units (12) of the plurality of rolling units (12) using means to transmit between them, in particular common to several rolling units (12) of an entity such as an axle or a bogie.

10. Diagnostic system (10) as claimed in any one of claims 1 to 9, comprising, for a rolling unit (12), either a single measuring and collecting apparatus (20) or at least two measuring and collecting apparatuses (20).

11. Diagnostic system (10) as claimed in claim 10, comprising, for a rolling unit (12), at least two measuring and collecting apparatuses (20), mounted in parallel, in particular a high-resolution measuring and collecting apparatus (20) and a measuring and collecting apparatus (20) having a low power consumption, in particular low resolution, in particular if the power supply means (28) of the measuring and collecting apparatuses (20) are not the power supply means of the machine (16), being provided specifically for each measuring and collecting apparatus (20) or common to several measuring and collecting apparatuses (20).

12. Diagnostic system (10) as claimed in any one of claims 1 to 11, comprising either a plurality of data storage means (24), in which case data storage means (24) are provided specifically for each measuring and collecting apparatus (20), the data storage means (24) storing said characteristic data of the corresponding measuring and collecting apparatus (20) but not that of the other measuring and collecting apparatuses (20), or comprising data storage means (24) shared between several measuring and collecting apparatuses (20) using means to transmit between them, in particular either common to several measuring and collecting apparatuses (20) of an entity such as an axle or a bogie or common to all the measuring, collecting and storages apparatuses.

13. Diagnostic system (10) as claimed in any one of claims 1 to 12, comprising means (24) for storing data for a period of time corresponding either to the period of time between two successive data collections by a collection unit (30) or corresponding to a pre-set period set by the operator implementing the diagnostic system (10), the storage means (24) being emptied of previously stored data at the end of the period of time, and/or permanent data storage means.

14. Diagnostic system (10) as claimed in any one of claims 1 to 13, wherein a measuring and collecting apparatus (20) is at least substantially housed in a separate box (22) mounted on the machine (16), in particular a box (22) mounted so as to be removable or detachable, the data communication means (26) and/or the data storage means (24) being at least partially structurally associated with the corresponding box (22) if necessary.

15. Diagnostic system (10) as claimed in any one of claims 1 to 14, having power supply means (28) for the measuring and collecting apparatuses (20), being other than the power supply means of the machine (16) and being provided separately for each measuring and collecting apparatus (20) or common to several measuring and collecting apparatuses (20), the power supply means (28) being autonomous means such as electric batteries or comprising energy recovery means.

16. Diagnostic system (10) as claimed in any one of claims 1 to 15, further comprising a memory (40) for storing said characteristic data, functionally associated with the calculation and analysis means (36) and structurally dissociated from - and if necessary being remote from - the network of tracks (18) and from the machine (16), the storage memory (40) being in a location that is either close to or remote from the location of the calculation and analysis means (36) with the aid of means to communicate between them.

17. Diagnostic system (10) as claimed in any one of claims 1 to 16, wherein the calculation and analysis means (36) are programmed, on the basis of the characteristic data pertaining to the rolling conditions of the rolling units (12), to implement all or part of a method for detecting a structural anomaly of the rolling units (12) and/or to implement a method for predicting that a rolling unit (12) should reach a significant threshold of the structural condition in question after a certain rotation in accordance with a law of evolution of the parameter pertaining to the rolling conditions of the rolling unit (12) as a function of the rotation thereof.

18. Diagnostic system (10) as claimed in any one of claims 1 to 17, wherein the calculation and analysis means (36) are either structurally separate from the collection unit (30) and configured to receive said characteristic data from the collection unit (30) with the aid of communication means or are structurally associated with the collection unit (30).

19. Diagnostic system (10) as claimed in any one of claims 1 to 18, wherein the calculation and analysis means (36) are configured to transmit the diagnostic information to the collection unit (30) and/or to a data means installed on board the machine (16), using diagnostic communication means if necessary.

20. Diagnostic system (10) as claimed in any one of claims 1 to 19, further comprising means for providing a visual and/or acoustic output installed on board the machine (16), configured to receive and to supply diagnostic information pertaining to the current or projected structural condition of each of the rolling units (12), in particular critical diagnostic information, in particular configured to communicate with the collection unit (30) with the aid of communication means so as to receive said diagnostic information from the collection unit (30).

21. Diagnostic system (10) as claimed in any one of claims 1 to 20, wherein the diagnosed current or projected structural condition is an altered state of the rolling unit (12) such as chipping or similar, in particular the presence or not of such alteration, and/or the extent of such alteration, or alteration of the bearing cage.

22. Diagnostic system (10) as claimed in any one of claims 1 to 21, wherein the parameter pertaining to the rolling conditions of a rolling unit (12) characteristic of its structural condition is the instantaneous rotation speed of the rolling unit (12), the measuring and collecting apparatuses (20) being instantaneous rotation speed sensors configured to measure the instantaneous rotation speed of a rolling unit (12).

23. Method for implementing a system (10) for diagnosing the structural condition of a plurality of rolling units (12), each having a unique identifying datum, mounted on a machine having wheels (16) in order to move it on a network of tracks (18), in particular a train, as claimed in any one of claims 1 to 22, wherein:
▪ by operating measuring and collecting apparatuses (20), the value of at least one parameter of the rolling conditions of the rolling units (12) characteristic of their structural condition is measured and collected over time and characteristic data pertaining to the rolling conditions of each of the rolling units (12) is supplied,
▪ by operating data storage means (24), said characteristic data and the identification data are stored,
▪ by operating data communication means (26) and the collection unit (30), said characteristic data and the stored identification data are transferred to the data collection unit (30) when the collection unit (30) is positioned structurally within the coverage area of the communication means (26),
▪ by operating calculation and analysis means (36) functionally associated with the collection unit (30) and on the basis of said characteristic data of the data collection unit (30) and at least one predetermined significant value of - or as a function of - the characteristic parameter, diagnostic information pertaining to the current or projected structural condition of each of the rolling units (12) mounted on the machine (16) is supplied.
